# EUROPEAN PATENT SPECIFICATION

(11) **EP 1 256 509 B1**
(45) Date of publication and mention of the grant of the patent: **03.01.2007**
(21) Application number: 02007680.8
(22) Date of filing: 04.04.2002
(51) Int. Cl.: B62D 21/15

(54) **Body structure of automobile**
Kraftfahrzeugaufbau
Structure de carrosserie de véhicule automobile

(30) Priority: 11.05.2001 JP 2001141029; 23.05.2001 JP 2001153910; 23.05.2001 JP 2001153912; 13.07.2001 JP 2001213107; 13.07.2001 JP 2001213109; 13.07.2001 JP 2001213110; 13.11.2001 JP 2001347464
(43) Date of publication of application: 13.11.2002
(73) Proprietor: DAIHATSU MOTOR COMPANY, LTD., Ikeda-shi, Osaka-fu 563-8651 (JP)
(72) Inventor: Hamaoka, Yoshinori, Ikeda-shi, Osaka-fu, 563-0045 (JP); Sawada, Yoshitaka, Ikeda-shi, Osaka-fu, 563-0045 (JP); Kadowaki, Taketoshi, Ikeda-shi, Osaka-fu, 563-0045 (JP); Koyaishi, Kaoru, Ikeda-shi, Osaka-fu, 563-0045 (JP); Fujiwara, Haruhiko, Ikeda-shi, Osaka-fu, 563-0045 (JP); Katou, Hiroyuki, Ikeda-shi, Osaka-fu, 563-0045 (JP); Tamaki, Yoshimi, Ikeda-shi, Osaka-fu, 563-0045 (JP); Shimizu, Masatoshi, Ikeda-shi, Osaka-fu, 563-0045 (JP); Takata, Toshiyuki, Ikeda-shi, Osaka-fu, 563-0045 (JP); Baba, Mutsumi, Ikeda-shi, Osaka-fu, 563-0045 (JP)
(74) Representative: Kern, Ralf M.

(56) References cited:
- EP-A- 1 084 936
- EP-A- 1 132 280
- EP-A- 1 149 756
- DE-A- 19 540 029
- FR-A- 2 809 072
- US-A- 3 718 364
- US-A- 4 702 515
- US-A- 5 048 345
- US-A- 5 118 160
- US-A- 5 984 403
- PATENT ABSTRACTS OF JAPAN vol. 2000, no. 06, 22 September 2000 (2000-09-22) & JP 2000 085619 A (DAIHATSU MOTOR CO LTD), 28 March 2000 (2000-03-28)

## Description

### BACKGROUND OF THE INVENTION

The present invention relates to a body structure of an automobile in which an input upon a vehicle collision is transmitted from an apron reinforcement to a beltline reinforcement in a front door via a front pillar.

In general, a structure may be adopted in an automobile that an impact to a vehicle interior is avoided by transmitting an input from the front of a vehicle upon a collision from an apron reinforcement to a front door via a front pillar.

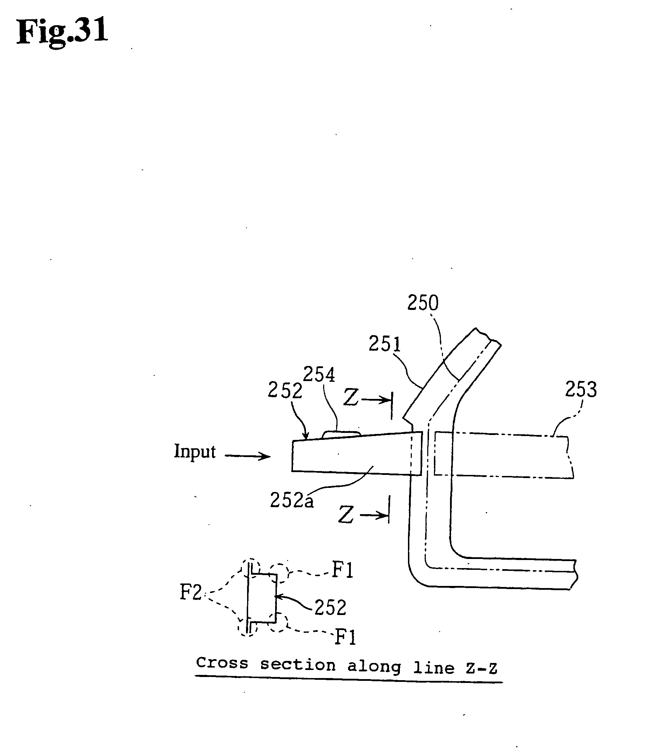

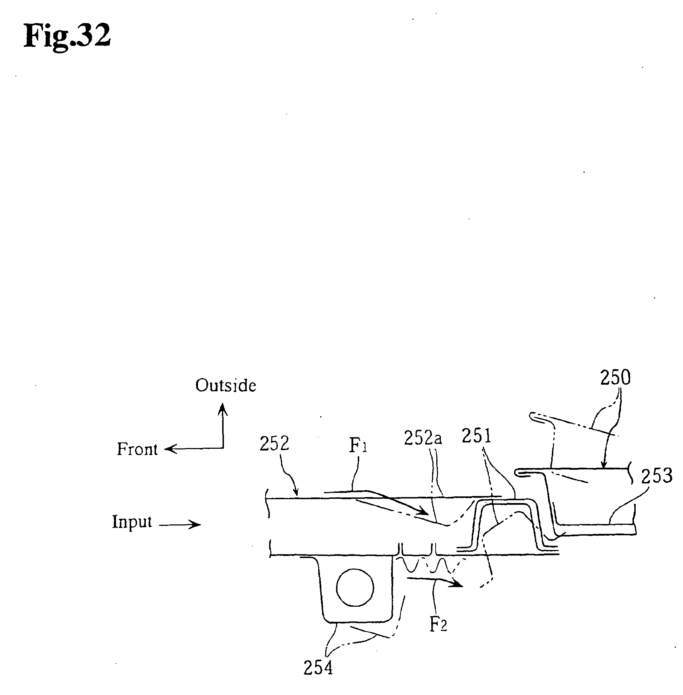

Conventional examples of such a vehicle body structure include a structure in which, as shown in Figs. 31 and 32, a rear end portion of an apron reinforcement 252 extending in a vehicle longitudinal direction is joined to a front pillar 251 for pivotally supporting a front door 250, and a beltline reinforcement 253 is disposed at the same height position as that of the apron reinforcement 252 in the front door 250 so as to be continuous therewith.

In the case of a structure that rigid bodies such as an engine unit, an ABS actuator and the like are supported on the front side of the left and right apron reinforcements 252, it is difficult to set a crush zone on the front side of the apron reinforcement 252. Therefore, the crush zone may be set between the front pillar 251 and a strut support 254 on the rear side of the engine unit in a middle portion 252a of the apron reinforcement 252.

Thus, an input upon a collision is transmitted from the apron reinforcement 252 to the beltline reinforcement 253 via the front pillar 215 and allowed to escape to the rear of the vehicle body while deformation of a door aperture is prevented by allowing the beltline reinforcement 253 to serve as a support.

Here, it is suggested that a bulkhead is disposed in an apron reinforcement joint portion within the front pillar to increase rigidity of the joint portion to prevent a cross-sectional collapse of the front pillar upon a collision.

In the above-described conventional vehicle body structure, however, the middle portion 252a of the apron reinforcement 252 may be bent toward the inside of the vehicle upon a collision, that is a so-called inward bending may occur, a distortion such as a rotation of the front pillar 251 toward the inside of the vehicle may occur along with the inward bending of the middle portion 252a, and the front door 250 may be displaced toward the outside of the vehicle due to this deformation. As a result, a problem arises that the input cannot be sufficiently transmitted to the beltline reinforcement 253.

That is, a load upon a collision is not received by the whole closed cross section of the apron reinforcement 252, but by each corner portion (see portions encircled by broken lines in Fig. 31) of the closed cross section. Furthermore, there is a tendency that the middle portion 252a is more likely to be depressed due to a load F1 transmitted through outside corner portions of the apron reinforcement 252, and hence the outside load acts on the inside of the front pillar 251 more than on its outer surface. Furthermore, the front pillar 251 has a characteristic of being distorted or deformed toward the inside of the vehicle due to the contact of a tyre or the like resulting from a collision. Thus, it is considered that from the high tendency that both the load F1 transmitted through the outside corner portions and a load F2 transmitted through the inside corner portions act as forces which rotate the front pillar 251 toward the inside, as well as from the characteristic of the front pillar 251 itself, the distortion or deformation of the front pillar 251 is increased.

On the other hand, when a structure is adopted that a bulkhead is disposed in the apron reinforcement joint portion of the front pillar, contact surfaces of the front pillar and the beltline reinforcement may slide and be displaced depending on the input direction or the like, and the door main body may be loosened toward the outside. In this case, the input cannot be reliably transmitted to the rear portion of the vehicle body.

The present invention has been accomplished in view of the above conventional situations. Accordingly, an object of the present invention is to provide a body structure of an automobile in which an impact force can be reliably transmitted to the rear portion of a vehicle body by preventing distortion of a front pillar toward the inside of a vehicle, loosening of a door main body can be prevented when a bulkhead is disposed, and an input can be reliably transmitted to the rear portion of the vehicle body.

### SUMMARY OF THE INVENTION

In a first aspect , there is provided a body structure of an automobile in which a rear end portion of an apron reinforcement extending in a vehicle longitudinal direction is joined to a front pillar extending in a vehicle vertical direction, wherein with a bend line set at a portion of the apron reinforcement on a front side of the joint portion with the front pillar so as to extend in the vertical direction, portion of the apron reinforcement on a front side of the bend line serving as an origin is inclined toward interior of the vehicle, and a bead portion extending forward from the origin bend line is formed in the apron reinforcement.

In a second aspect, according to the invention, there is provided a body structure of an automobile in which a door main body is disposed on a pillar member extending in a vehicle vertical direction so that a door main body wall in the vehicle longitudinal direction and a pillar member wall in the vehicle longitudinal direction are at least partly overlapped with each other as viewed in the vehicle longitudinal direction, and a beltline reinforcement extending in the vehicle longitudinal direction is disposed in the door main body so that an input upon a vehicle collision is transmitted to a rear portion of the vehicle body via the pillar member and the beltline reinforcement, characterized in that an end portion of the beltline reinforcement in the longitudinal direction is extended so as to be made adjacent to or brought into contact with a front-side wall and a rear-side wall of the door main body while rigidity of a vehicle outside wall of the pillar member is made higher than rigidity of a portion of the wall of the pillar member in the vehicle longitudinal direction opposed to the beltline reinforcement.

In a third aspect, there is provided a body structure of an automobile in which a rear end portion of an apron reinforcement extending in a vehicle longitudinal direction is connected to a front pillar extending in a vehicle vertical direction, characterized in that a bulkhead having a box cross section extending in the vehicle longitudinal direction is disposed in the apron reinforcement joint portion within the front pillar, a beltline reinforcement is disposed in the front door so as to be substantially at the same height position as that of the apron reinforcement, and a cut-out recessed portion is formed in a portion of the bulkhead which is opposed to the beltline reinforcement.

In a fourth aspect, there is provided a body structure of an automobile as described in the first aspect, wherein a main body of a front door is disposed on the front pillar so that a front wall of the door main body overlaps with a rear-side wall of the front pillar when viewed in the vehicle longitudinal direction, a front end portion of the beltline reinforcement extending in the vehicle longitudinal direction in the door main body is extended so as to be brought into contact with the front wall of the door main body, and a patch is disposed on an outside wall of the front pillar so that rigidity of the outside wall is increased, thereby resulting in relatively low rigidity of the rear-side wall of the front pillar.

In a fifth aspect, there is provided a body structure of an automobile as described in the first aspect, wherein a bulkhead having a box cross section extending in the vehicle longitudinal direction is disposed in the apron reinforcement joint portion within the front pillar, a beltline reinforcement is disposed in the front door so as to be substantially at the same height position as that of the apron reinforcement, and a cut-out recessed portion is formed in a portion of the bulkhead which is opposed to the beltline reinforcement.

In a sixth aspect, there is provided a body structure of an automobile as described in the first aspect, wherein the main body of the front door is disposed on the front pillar so that the front wall of the door main body overlaps with the rear-side wall of the front pillar when viewed in the vehicle longitudinal direction, a front end portion of the beltline reinforcement extending in the vehicle longitudinal direction in the door main body is extended so as to be brought into contact with the front wall of the door main body, a patch is disposed on the outside wall of the front pillar so that rigidity of the outside wall is increased, thereby resulting in relatively low rigidity of the rear-side wall of the front pillar, a bulkhead having a box cross section extending in the vehicle longitudinal direction is disposed in the apron reinforcement joint portion within the front pillar, a beltline reinforcement is disposed in the front door so as to be substantially at the same height position as that of the apron reinforcement, and a cut-out recessed portion is formed in a portion of the bulkhead which is opposed to the beltline reinforcement.

In a seventh aspect, there is provided a body structure of an automobile as described in the second aspect, wherein the pillar member is a front pillar, a rear end portion of the apron reinforcement extending toward the front of a vehicle is connected to the front pillar, a bulkhead having a box cross section extending in the vehicle longitudinal direction is disposed in the apron reinforcement joint portion within the front pillar, a beltline reinforcement is disposed in the front door so as to be substantially at the same height position as that of the apron reinforcement, and a cut-out recessed portion is formed in a portion of the bulkhead which is opposed to the beltline reinforcement.

In an eighth aspect, there is provided a body structure of an automobile in which a rear end portion of an apron reinforcement extending in the vehicle longitudinal direction is connected to a front pillar extending in the vehicle vertical direction, characterized in that an extending portion extending to an outside wall of the front pillar is formed in the rear end portion of the apron reinforcement, and the extending portion and the outside wall are connected together by forming a box cross section therebetween.

In a ninth aspect, there is provided a body structure of an automobile as described in the eighth aspect, wherein the box cross section is constituted by a bead portion formed in the apron reinforcement, and the bead portion extends toward the front of the vehicle from the joint portion of the front pillar over the front pillar.

In a tenth aspect, there is provided a body structure of an automobile as described in the eighth or ninth aspect, wherein a plurality of the box cross sections are formed in the vehicle vertical direction.

In an eleventh aspect, there is provided a body structure of an automobile in which a rear end portion of an apron reinforcement extending in the vehicle longitudinal direction is connected to a front pillar extending in the vehicle vertical direction, characterized in that a bulkhead having a box cross section extending in the vehicle longitudinal direction is disposed in a portion corresponding to the apron reinforcement joint portion within the front pillar, and an outside wall and an inside wall of the front pillar are connected together by placing the bulkhead across a gap therebetween.

In a twelfth aspect, there is provided a body structure of an automobile as described in the eleventh aspect, wherein the bulkhead has a plurality of box cross sections by providing at least one second reinforcement in a first reinforcement having a U-shaped cross section, and either the above first or second reinforcements is connected to a hinge mounting plate of the outside wall.

In a thirteenth aspect, there is provided a body structure of an automobile in which a rear end portion of an apron reinforcement extending in the vehicle longitudinal direction is connected to a front pillar extending in the vehicle vertical direction, characterized in that an extending portion extending to an outside wall of the front pillar is formed in the rear end portion of the apron reinforcement, the extending portion and the outside wall are connected together by forming a box cross section therebetween, a bulkhead having a box cross section extending in the vehicle longitudinal direction is disposed in a portion corresponding to the apron reinforcement joint portion within the front pillar, an outside wall and an inside wall of the front pillar are connected together by placing the bulkhead across a gap therebetween, a beltline reinforcement is further provided along the door beltline in the front door, and the beltline reinforcement is disposed substantially at the same height position as that of the apron reinforcement.

In a fourteenth aspect, there is provided a body structure of an automobile in which a door which opens and closes a door aperture is disposed on the door aperture formed in a side portion of the vehicle body, and a beltline reinforcement is disposed along a beltline in the main body of the door, characterized in that the beltline reinforcement has a structure having a closed cross section, a rear end portion of the beltline reinforcement has a shape becoming smaller in the vehicle width direction toward the rear side, and a predetermined gap is provided between an outer pillar and a pillar reinforcement of a pillar member opposed to the rear end surface of the beltline reinforcement.

In a fifteenth aspect, there is provided a body structure of an automobile as described in the fourteenth aspect, wherein a bend portion bent when hit by the beltline reinforcement displaced toward the rear is formed in the pillar reinforcement.

In a sixteenth aspect, there is provided a body structure of an automobile body in which a door which opens and closes a door aperture is disposed on the door aperture formed in a side portion of the vehicle body, and a beltline reinforcement is disposed along a beltline in the main body of the door, characterized in that the beltline reinforcement has a structure having a closed cross section, a door lock reinforcement disposed in a rear end portion in the door main body is extended so as to surround the rear of the beltline reinforcement, and an escape hole is formed in a portion of the extending portion which faces a rear end surface of the beltline reinforcement.

In a seventeenth aspect, there is provided a body structure of an automobile in which a door which opens and closes a door aperture is disposed on the door aperture formed in a side portion of the vehicle body, and a beltline reinforcement is disposed along a beltline in the main body of the door, characterized in that the beltline reinforcement has a structure having a closed cross section, a rear end portion of the beltline reinforcement has a shape becoming smaller in the vehicle width direction toward the rear side, a predetermined gap is provided between an outer pillar and a pillar reinforcement of a pillar member opposed to a rear end surface of the beltline reinforcement, a door lock reinforcement disposed in a rear end portion in the door main body is extended so as to surround the rear of the beltline reinforcement, and an escape hole is formed in a portion of the extending portion which faces the rear end surface of the beltline reinforcement.

In an eighteenth aspect, there is provided a body structure of an automobile in which a door which opens and closes a door aperture is disposed on the door aperture formed in a side portion of the vehicle body, and a beltline reinforcement is disposed along a beltline in the main body of the door, characterized in that the beltline reinforcement has a structure having a closed cross section in a substantially rectangular shape which is long in a vertical direction, a vehicle front side portion thereof is larger than a rear side portion thereof in the vertical direction, a directly matching portion is formed in a portion of the beltline reinforcement closer to the front side by bringing at least a vehicle interior-side wall of a central portion in the vertical direction into contact with a vehicle outside wall so that upper-side and lower-side closed cross sections remain, and the vehicle interior side of the directly matching portion serves as a space for functional components.

In a nineteenth aspect, there is provided a body structure of an automobile as described in the eighteenth aspect, wherein when viewed in the vehicle longitudinal direction, the upper-side closed cross section and the lower-side closed cross section of the directly matching portion are displaced toward the vehicle outside from the directly matching portion and the vehicle inside from the directly matching portion, respectively.

In a twentieth aspect, there is provided a body structure of an automobile as described in the eighteenth or nineteenth aspect, wherein a pipe member extending in the vehicle longitudinal direction is connected to the vehicle interior-side wall of the upper-side closed cross section.

In a twenty first aspect, there is provided a body structure of an automobile as described in the twentieth aspect, wherein a front end of the pipe member is positioned in the rear of a front end of the door main body.

In a twenty second aspect, there is provided a body structure of an automobile in which a door which opens and closes a door aperture is disposed on the door aperture formed in a side portion of the vehicle body, a sash frame for a window frame is connected to a door inner panel in the main body of the door, and a beltline reinforcement is disposed along a beltline so that an input from the front of a vehicle is transmitted to a pillar member positioned in the rear of the vehicles via the beltline reinforcement, characterized in that a rear end portion of the beltline reinforcement is extended so as to lap over the sash frame when viewed from the side of the vehicle, the extending portion is connected to the rear end portion of the door inner panel, a predetermined gap is provided between a pillar outer and a pillar reinforcement of the pillar member in a portion facing the extending portion.

According to the body structure of the first aspect, since a bend line is set in front of the portion joint to the front pillar in the apron reinforcement, the front side portion of the apron reinforcement is inclined toward the inside of the vehicle by using the bend line as an origin and a bead portion extending forward from the bend line as the origin, the front side of the apron reinforcement from the bend line is bent and deformed due to a load upon a collision. Along with this, an outward bending deformation mode is induced where the rear side portion of the apron reinforcement from the bend line is protruded toward the outside of the vehicle. As a result, the load transmitted through the outside acts on the outside of the front pillar, and this action allows an inverse torsional moment, which stops rotation of the front pillar toward the inside of the vehicle, resulting in smaller distortion of the front pillar. Consequently, displacement of the front door toward the outside of the vehicle can be avoided, and hence an input can be reliably transmitted to the rear portion of the vehicle body.

According to the second aspect, according to the invention, since an end portion of the beltline reinforcement is extended so as to be adjacent to or in contact with a door main body wall in the vehicle longitudinal direction, that is a rear wall or a front wall and rigidity of the vehicle outside wall of the pillar member is made higher than the rigidity of a portion of the wall in the vehicle longitudinal direction which is opposed to the reinforcement, upon a vehicle collision, the beltline reinforcement pierces and wedgingly engages a portion of the pillar member wall in the vehicle longitudinal direction whose rigidity is relatively low, and hence displacement of the beltline reinforcement and further the door main body toward the outside is restricted. As a result, even when the pillar member is distorted and deformed toward the inside of the vehicle, the door main body is not loosened due to slippage, and hence an input can be reliably transmitted to the rear portion of the vehicle body via the pillar member and the beltline reinforcement.

According to the third aspect, since a bulkhead is disposed in the apron reinforcement joint portion within the front pillar, rigidity of the apron reinforcement joint portion in the front pillar can be increased, a cross-sectional collapse of the front pillar upon a collision can be prevented, and an input can be reliably transmitted to the beltline reinforcement.

Furthermore, since a cut-out recessed portion is formed in a portion of the bulkhead which is opposed to the beltline reinforcement, the beltline reinforcement can easily wedgingly engage the front pillar upon a collision, and loosening of the door main body can be reliably prevented. That is, since the cut-out recessed portion of the bulkhead serves as an escape upon engagement of the beltline reinforcement, the beltline reinforcement can reliably wedgingly engage the front pillar, loosening of the door main body toward the outside of the vehicle can be prevented, and an input can be reliably transmitted to the rear portion of the vehicle body.

According to the fourth aspect, since the front end portion of the beltline reinforcement is extended so as to be brought into the front wall of the door main body, and rigidity of the vehicle outside wall of the front pillar is made higher than the rigidity of the rear-side wall, the beltline reinforcement pierces and wedgingly engages the rear-side wall of the front pillar upon a vehicle collision, and hence displacement of the beltline reinforcement and further the door main body toward the outside of the door main body is restricted. As a result, even when the pillar member is distorted and deformed toward the inside of the vehicle, the door main body is not loosened due to slippage, and hence an input can be reliably transmitted to the rear portion of the vehicle body via the pillar member and the beltline reinforcement.

According to the fifth aspect, since a bulkhead is disposed in the apron reinforcement joint portion of the front pillar, rigidity of the apron reinforcement joint portion of the front pillar can be increased, a cross-sectional collapse of the front pillar upon a collision can be prevented, and an input can be reliably transmitted to the beltline reinforcement.

Furthermore, a cut-out recessed portion is provided in a portion of the bulkhead which is opposed to the beltline reinforcement, the beltline reinforcement can reliably wedgingly engage the front pillar upon a collision, loosening of the door main body can be reliably prevented, and the same effect as that of the third aspect can be obtained.

According to the sixth aspect, displacement of the front door toward the outside of the vehicle can be prevented, an input can be reliably transmitted to the rear portion of the vehicle body, rigidity of the apron reinforcement joint portion of the front pillar can be increased, a cross-sectional collapse of the front pillar upon a collision can be prevented, and an input can be reliably transmitted to the beltline reinforcement. Furthermore, since the cut-out recessed portion of the bulkhead serves as an escape upon engagement of the beltline reinforcement, the beltline reinforcement can wedgingly engage the front pillar reliably, loosening of the door main body toward the outside of the vehicle can be prevented, and an input can be reliably transmitted to the rear portion of the vehicle body.

According to the seventh aspect, even when the pillar member is distorted and deformed toward the inside of the vehicle, the door main body is not loosened due to slippage, and hence an input can be reliably transmitted to the rear portion of the vehicle body via the pillar member and the beltline reinforcement, rigidity of the apron reinforcement joint portion of the front pillar can be increased, a cross-sectional collapse of the front pillar upon a collision can be prevented, and an input can be reliably transmitted to the beltline reinforcement. Furthermore, since the cut-out recessed portion of the bulkhead serves as an escape upon engagement of the beltline reinforcement, the beltline reinforcement can wedgingly engage the front pillar reliably, loosening of the door main body toward the outside of the vehicle can be prevented, and an input can be reliably transmitted to the rear portion of the vehicle body.

According to the body structure of the eighth aspect, since the extending portion of the apron reinforcement and the outside wall of the front pillar are joined together so as to constitute a box cross section, the bearing force of the joint portion of the apron reinforcement and the front pillar against an input from the front of the vehicle can be increased, and rotation of the front pillar toward the inside of the vehicle can be prevented. As a result, an input can be transmitted from the apron reinforcement to the door main body via the front pillar, and further influence on the vehicle interior can be prevented.

According to the ninth aspect, since a bead portion constituting a box cross section is formed in the apron reinforcement, and the bead portion is extended from the joint portion of the front pillar toward the front of the vehicle, a fall of the front pillar toward the inside of the vehicle can be prevented by increasing the bearing force of the apron reinforcement itself, and the input can be reliably transmitted to the door main body.

According to the tenth aspect, since a plurality of the box cross sections are formed vertically, the bearing force of the joint portion of the apron reinforcement against the input can be further increased.

According to the body structure of the eleventh aspect, since a bulkhead having a box cross section extending in the vehicle longitudinal direction is disposed in the front pillar and the bulkhead is placed across a gap between the outside wall and the inside wall of the front pillar, the bearing force of the joint portion of the apron reinforcement and the front pillar can be increased, a fall of the front pillar toward the inside of the vehicle due to the input can be prevented as in the case of the fourth aspect.

According to the twelfth aspect, since the bulkhead has a plurality of box cross sections in the first and second reinforcements and any of the reinforcements is joined to a hinge mounting plate of the outside wall, rigidity of the hinge mounting portion can be increased, and displacement of the door main body toward the outside of the vehicle due to the fall of the front pillar toward the inside of the vehicle can be prevented.

According to the thirteenth aspect, since the extending portion of the apron reinforcement and the outside wall of the front pillar are joined together so as to constitute a box cross section, a bulkhead is disposed in the joint portion within the front pillar, the bulkhead is placed across a gap between the outside wall and the inside wall of the front pillar, and further the beltline reinforcement of the beltline disposed in the door main body is positioned substantially at the same height position as that of the apron reinforcement, the bearing force of the joint portion of the apron reinforcement can be increased, a fall of the front pillar toward the inside of the vehicle can be prevented, an input from the front of the vehicle can be reliably transmitted from the apron reinforcement to the beltline reinforcement via the front pillar.

According to the body structure of the fourteenth aspect, since a beltline reinforcement having a structure with a closed cross section is disposed in the door main body, and the rear end portion of the beltline reinforcement is made narrower in the vehicle width direction toward the rear side, the rear end portion of the beltline reinforcement has a tapering and pointing shape in a plan view. Consequently, when the door main body is displaced toward the rear due to an input from the front of the vehicle, the rear end portion of the beltline reinforcement pierces and wedgingly engages the pillar member, and hence displacement of the beltline reinforcement in the vehicle width direction is restricted. As a result, an input upon a collision can be reliably transmitted to the pillar member via the beltline reinforcement, and influence on the vehicle interior can be avoided.

Furthermore, since the displacement toward the outside of the vehicle is restricted by allowing the rear end portion of the beltline reinforcement to wedgingly engage the pillar member, deformation and extension of a corner portion of the door inner panel as described above can be prevented, and an input can also be reliably transmitted to the pillar member by this constitution.

Furthermore, according to the present invention, a gap in a predetermined dimension is provided between the outer pillar and the pillar reinforcement of the pillar member, an engagement margin to the outer pillar of the beltline reinforcement can be set. Consequently, while displacement of the beltline reinforcement toward the outside of the vehicle is stopped, the door can be opened after a collision.

According to the fifteenth aspect, since a bend portion is formed in the pillar reinforcement, an engagement when hit by the beltline reinforcement can be reliably obtained, and displacement toward the outside of the vehicle can be more reliably prevented.

According to the sixteenth aspect, since an extending portion surrounding the rear of the beltline reinforcement is formed in the door lock reinforcement disposed in the door main body and an escape hole is formed in the extending portion, the beltline reinforcement is inserted into the escape hole without interfering with the door lock reinforcement and pierces and wedgingly engages the pillar member when the door main body is displaced toward the rear, and thus displacement of the beltline reinforcement in the vehicle width direction is restricted. As a result, an input can be reliably transmitted to the pillar member as in the case of the fourteenth aspect.

Since displacement toward the outside of the vehicle is restricted by allowing the beltline reinforcement to wedgingly engage the pillar member, deformation and extension of a corner portion of the door inner panel can be prevented, and an input can be reliably transmitted to the pillar member.

Furthermore, since the door lock reinforcement is extended so as to surround the rear of the beltline reinforcement, door rigidity of the beltline portion can be increased without increasing the number of components.

According to the seventeenth aspect, since the rear end portion of the beltline reinforcement is made narrower in the vehicle width direction toward the rear side, a predetermined gap is provided between the outer pillar and the pillar reinforcement, an extending portion surrounding the rear of the beltline reinforcement is further formed in the door lock reinforcement, an escape hole is formed in the extending portion, the beltline reinforcement is inserted into the escape hole without interfering with the door lock reinforcement and pierces and wedgingly engages the pillar member when the door main body is displaced toward the rear, and thus displacement of the beltline reinforcement in the vehicle width direction is restricted. As a result, an input upon a collision can be reliably transmitted to the pillar member via the beltline reinforcement.

According to the body structure of the eighteenth aspect, since the beltline reinforcement has a structure with a substantially rectangular closed cross section which is long in a vertical direction by itself alone, rigidity of the door main body against the load in the vehicle longitudinal direction can be increased, a cross-sectional collapse due to an input upon a collision can be prevented, and the input can be reliably transmitted to the rear of the body.

Furthermore, since a front side portion of the beltline reinforcement is larger vertically and a directly matching portion is formed in a portion closer to the front side portion so that upper-side and lower-side closed cross sections remain, and the directly matching portion serves as a space for functional components, a space for functional components can be secured while required rigidity of the beltline reinforcement is maintained, and protrusion of the functional components toward the vehicle interior can be prevented.

According to the nineteenth aspect, since the upper-side closed cross section and the lower-side closed cross section of the directly matching portion are displaced toward the outside of the vehicle and toward the inside of the vehicle, respectively, from the directly matching portion, interior-side functional components (for example, an inner handle, cup holder and so forth) can be disposed by effectively utilizing a free space above the lower-side closed cross section, and door-side functional components (for example, a wind regulator and so forth) can be disposed by effectively utilizing a free space below the upper-side closed cross section.

According to the twentieth aspect, since a pipe member is joined to the vehicle interior-side wall of the upper-side closed cross section, the bearing force of the directly matching portion against an input in the vehicle longitudinal direction can be increased, and a cross-sectional collapse in the directly matching portion can be reliably prevented.

Furthermore, since the pipe member is disposed on the inner surface of the vehicle interior-side wall of the upper-side closed cross section, the pipe member can be disposed by effectively utilizing a free space in the door main body, and hence the door width does not need to be increased.

According to the twenty first aspect, since a front end of the pipe member is positioned in the rear of the front end of the door main body, the door main body is bent at the front end portion of the pipe member as a bending point upon a lateral collision, and a bending point can be set at a desired position. For example, by setting the front end of the pipe member at a position in front of a driver or passenger, influence on the driver and passenger upon a lateral collision can be prevented.

According to the body structure of the twenty second aspect, since an extending portion of the beltline reinforcement is lapped over a sash frame in the vehicle width direction and joined to the rear end portion of the door inner panel, the extending portion of the beltline reinforcement pierces and wedgingly engages the pillar member when the door main body is displaced toward the rear due to an input from the front of the vehicle, displacement of the beltline reinforcement in the vehicle width direction is restricted. As a result, an input upon a collision can be reliably transmitted to the pillar member via the beltline reinforcement, and influence on the vehicle interior can be avoided.

Furthermore, since the extending portion of the beltline reinforcement is lapped over the sash frame, an input to the beltline reinforcement does not escape to the sash frame side, and only the rear end portion of the beltline reinforcement is displaced toward the rear. The input can also be reliably transmitted to the pillar member by this constitution.

Furthermore, since a predetermined gap is provided between the outer pillar and the pillar reinforcement of the pillar member, the engagement margin of the beltline reinforcement to the outer pillar can be set. Consequently, while displacement of the beltline reinforcement toward the side of the open door is stopped, the door can be opened after a collision.

### BRIEF DESCRIPTION OF THE DRAWINGS

Fig. 1 is a side view showing an automobile according to a first embodiment of first to seventh aspects, the second aspect in accordance with the invention;
Fig. 2 is a schematic perspective view showing a front portion of a vehicle body in the above embodiment;
Fig. 3 is a cross-sectional plan view (cross sectional view along line III-III in Fig. 1) showing the surroundings of the front pillar of the above embodiment;
Fig. 4 is a side view showing an apron reinforcement joint portion in the above embodiment;
Fig. 5 is a schematic cross-sectional plan view showing the apron reinforcement joint portion;
Fig. 6 is a perspective view showing the apron reinforcement.
Fig. 7 is a perspective view showing a bulkhead of the above embodiment;
Fig. 8 is a cross-sectional plan view (cross sectional view along line VIII-VIII in Fig. 1) showing the surroundings of a center pillar of the above embodiment;
Fig. 9 is a schematic perspective view showing the bulkhead;
Fig. 10 is a schematic cross-sectional plan view showing the surroundings of a front pillar of the above embodiment;
Fig. 11 is a schematic cross-sectional plan view showing the surroundings of the center pillar;
Fig. 12 is a schematic cross-sectional plan view showing the surroundings of a rear pillar of the above embodiment;
Fig. 13 is a schematic perspective view showing the rear pillar;
Fig. 14 shows a front pillar according to a modification of the above embodiment;
Fig. 15 shows a center pillar according to a modification of the above embodiment;
Fig. 16 is a schematic side view showing a vehicle body according to a second embodiment of eighth to thirteenth aspects;
Fig. 17 is a side view showing a joint portion of a front pillar and an apron reinforcement according to the above embodiment;
Fig. 18 is a cross-sectional plan view (cross sectional view along line XVIII-XVIII in Fig. 17) showing the joint portion of the front pillar;
Fig. 19 is a cross-sectional front view (cross sectional view along line XIX-XIX in Fig. 17) showing the joint portion of the front pillar;
Fig. 20 is a perspective view showing a bulkhead joint portion of the apron reinforcement;
Fig. 21 is a cross-sectional plan view showing the surrounding of a center pillar according to a third embodiment of fourteenth to seventeenth aspects;
Fig. 22 is an exploded perspective view showing a beltline reinforcement according to the above embodiment;
Fig. 23 is a side view showing a front door provided with a beltline reinforcement according to a fourth embodiment of eighteenth to twenty first aspects;
Fig. 24 is an exploded perspective view showing the beltline reinforcement;
Fig. 25 is a cross sectional view (cross sectional view along line XXV-XXV in Fig. 23) showing the beltline reinforcement;
Fig. 26 is a cross sectional view (cross sectional view along line XXVI-XXVI in Fig. 23) showing the beltline reinforcement;
Fig. 27 is a cross sectional view (cross sectional view along line XXVII-XXVII in Fig. 23) showing the beltline reinforcement;
Fig. 28 is a side view showing a front door according to a fifth embodiment of a twenty second aspect;
Fig. 29 is a cross sectional plan view (cross sectional view along line XXIX-XXIX in Fig. 28) showing a rear end portion of the front door;
Fig. 30 is a schematic view schematically showing a door main body of the above embodiment in a state deformed by an input;
Fig. 31 is a schematic side view showing a conventional general vehicle body structure; and
Fig. 32 is a schematic plan view showing the conventional vehicle body.

### DETAILED DESCRIPTION OF THE PREFERRED EMBODIMENTS

Hereafter, embodiments of the present invention will be described with reference to accompanying drawings.

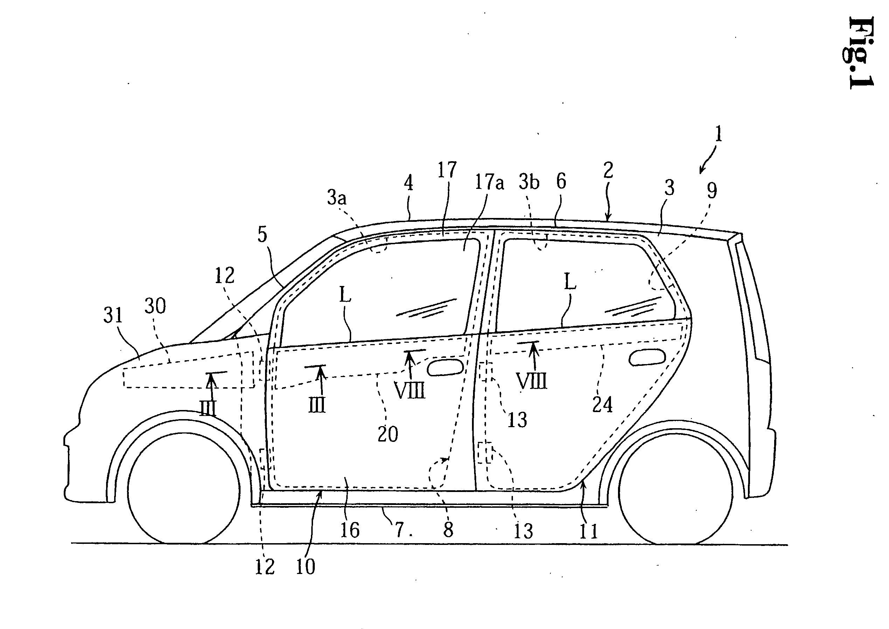

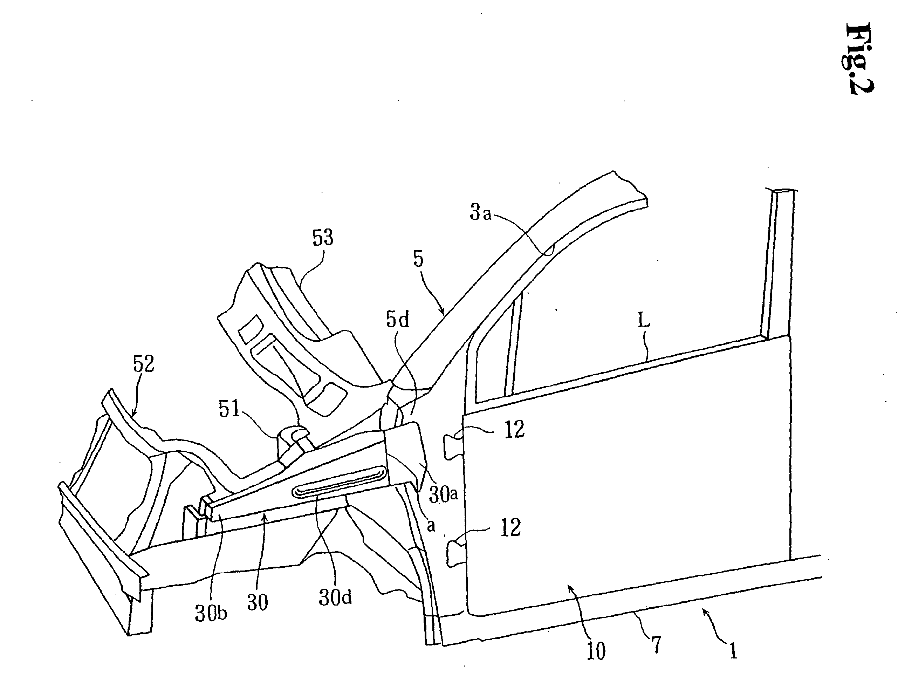

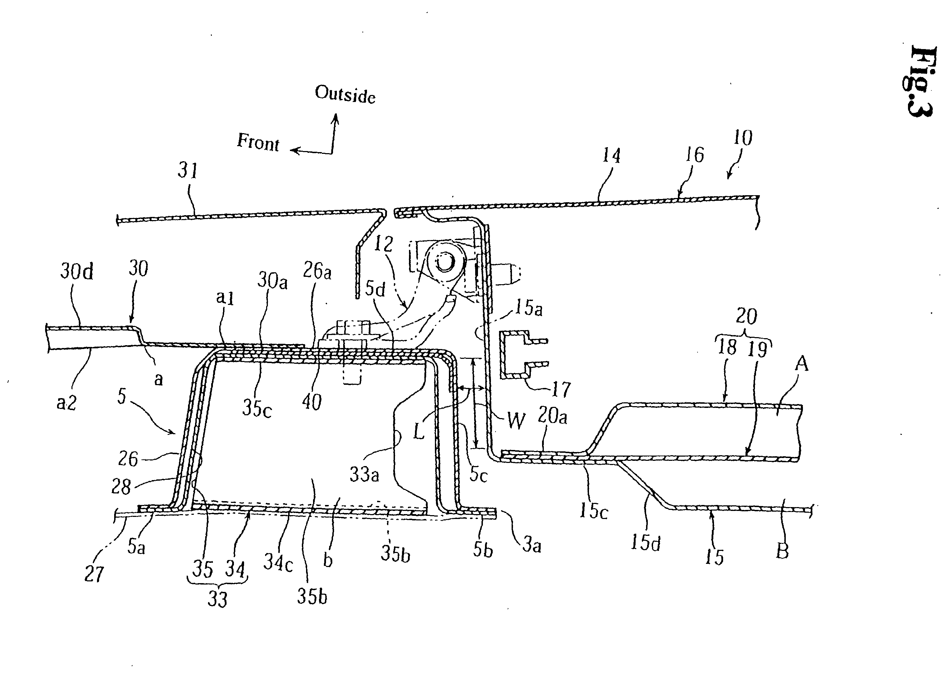

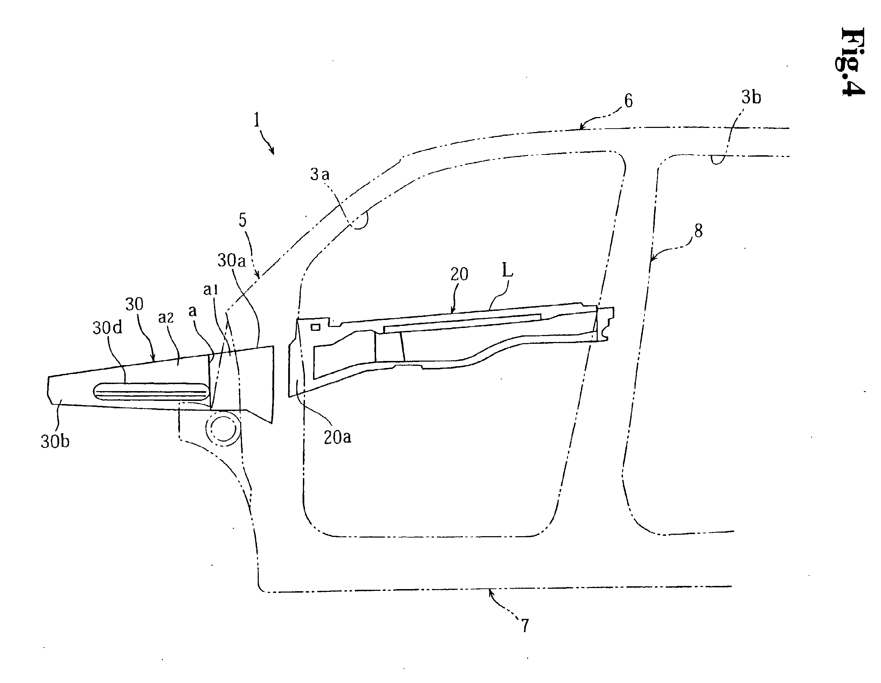

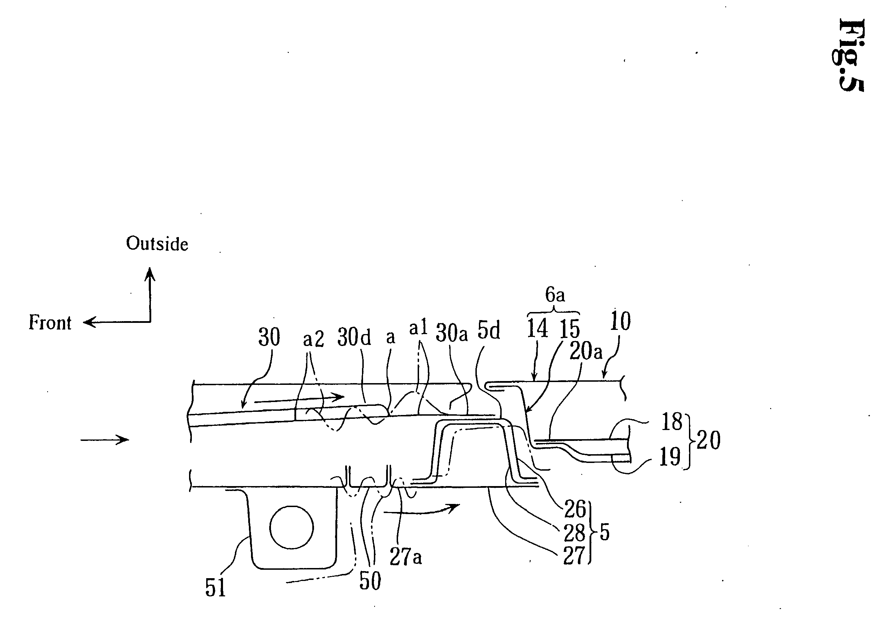

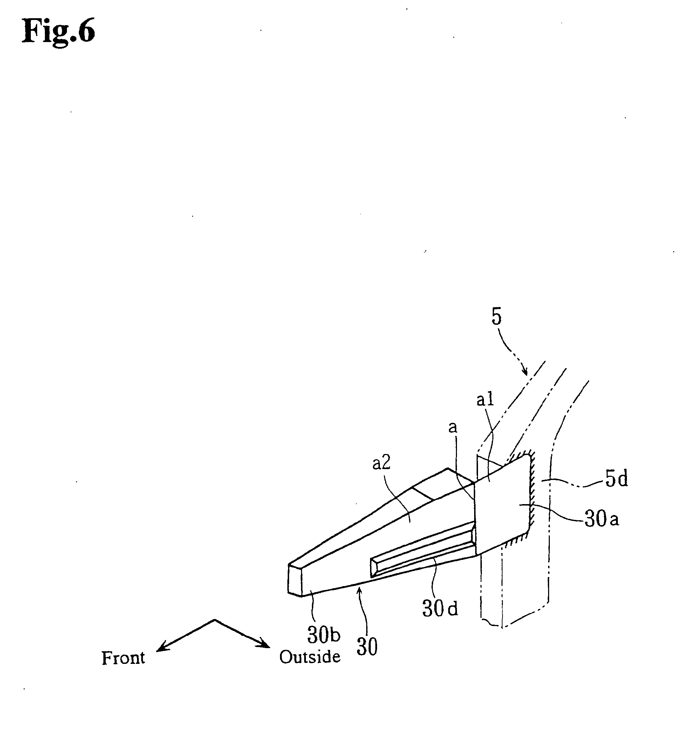

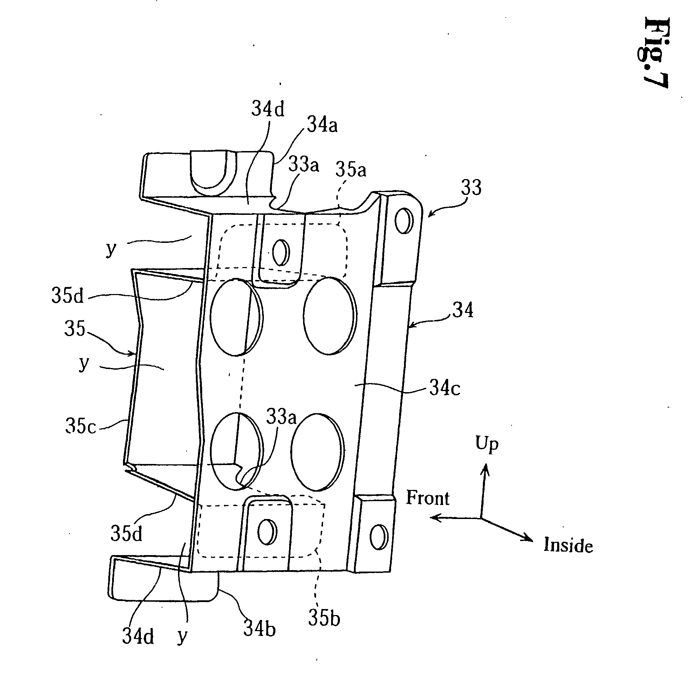

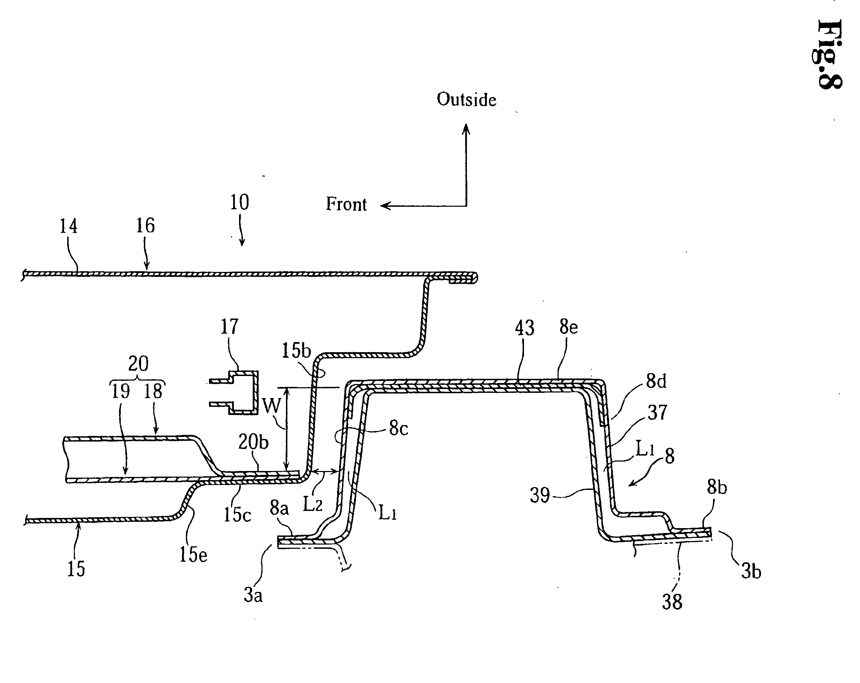

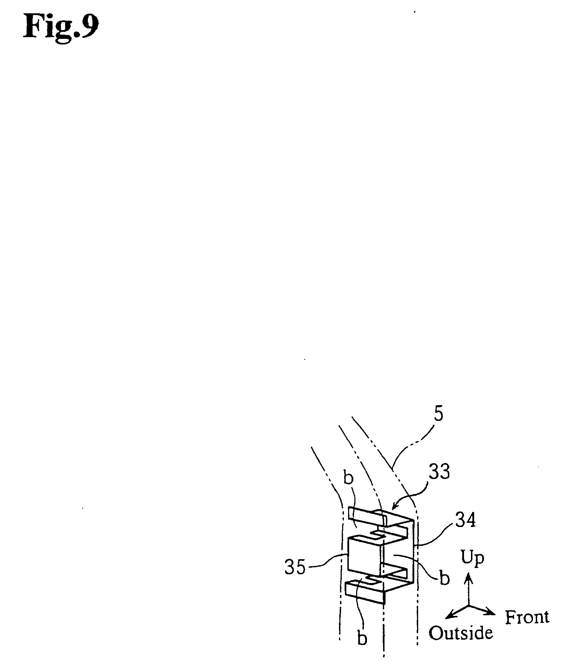

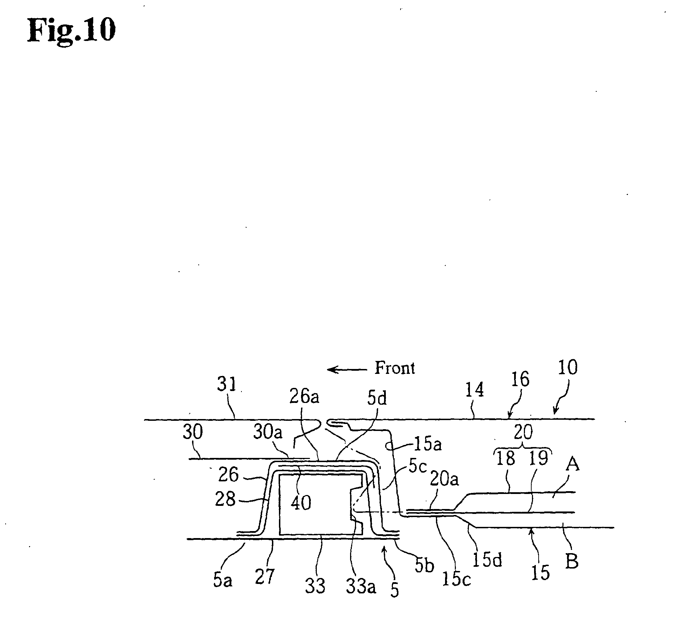

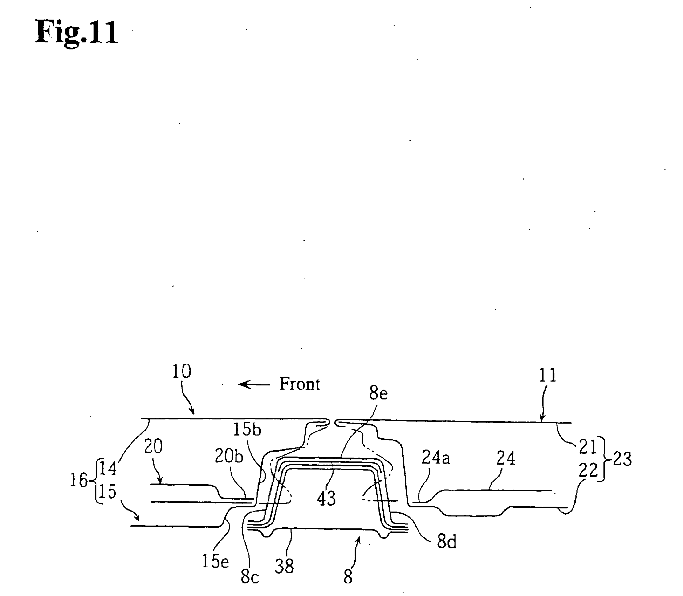

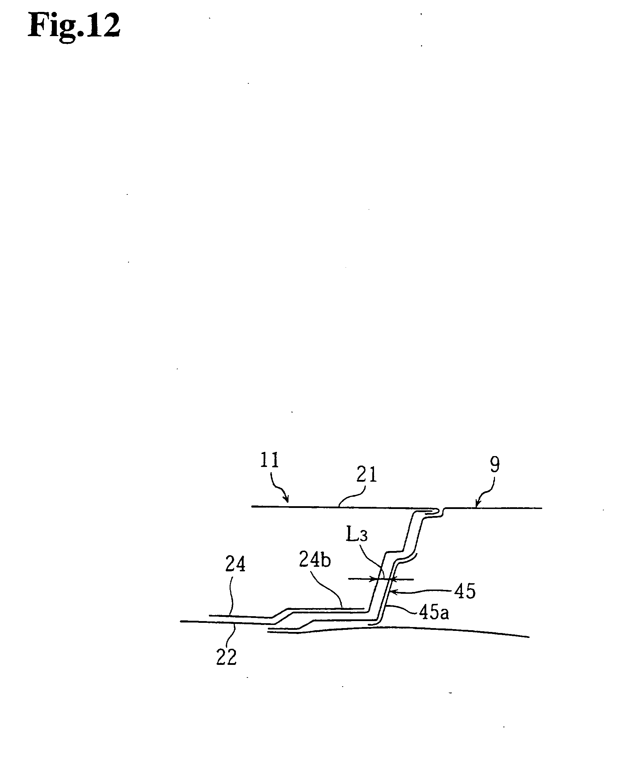

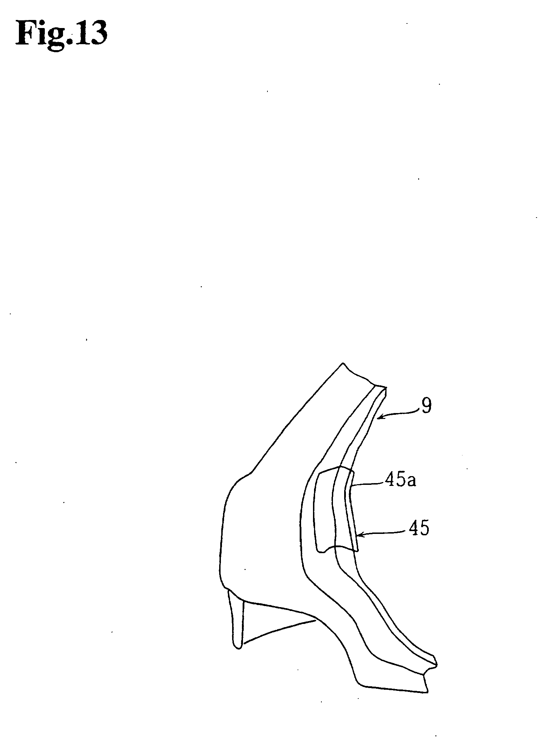

Figs. 1 to 13 are views for explaining a body structure of an automobile according to one embodiment (first embodiment) of first to seventh aspects. Fig. 1 is a side view showing an automobile adopting the above structure. Fig. 2 is a schematic perspective view showing a front portion of the vehicle body. Fig. 3 is a cross-sectional plan view (cross sectional view along line III-III in Fig. 1) showing the surroundings of a front pillar. Fig. 4 is a side view showing an apron reinforcement joint portion. Fig. 5 is a schematic cross-sectional plan view showing the apron reinforcement joint portion. Fig. 6 is a perspective view showing the apron reinforcement. Fig. 7 is a perspective view showing a bulkhead. Fig. 8 is a cross-sectional plan view (cross sectional view along line VIII-VIII in Fig. 1) showing the surroundings of a center pillar. Fig. 9 is a schematic perspective view showing the bulkhead. Fig. 10 is a schematic cross-sectional plan view showing the surroundings of the front pillar. Fig. 11 is a schematic cross-sectional plan view showing the surroundings of the center pillar. Fig. 12 is a schematic cross-sectional plan view showing the surroundings of a rear pillar. Fig. 13 is a schematic perspective view showing the rear pillar.

In the figures, reference numeral 1 denotes an automobile adopting the structure of this embodiment. This vehicle body 2 has a schematic structure that a roof panel 4 is connected between upper ends of left and right side panels 3, 3 and a floor panel (not shown) is connected between lower ends to form a vehicle interior.

The side panel 3 has a structure that a front end portion of a roof rail 6 extending toward the rear of the body is connected to an upper end portion of a front pillar 5 extending in the vehicle vertical direction, a front end portion of a locker panel 7 similarly extending toward the rear of the body is connected to a lower end portion of the front pillar, a center pillar 8 extending in the vehicle vertical direction is connected between the locker panel 7 and the roof rail 6 substantially at the centers thereof in the vehicle longitudinal direction, and a rear pillar 9 is further connected between rear ends of the locker panel 7 and the roof rail 6. Consequently, a front door aperture 3a and a rear door aperture 3b are formed.

A front door 10 is disposed on the front door aperture 3a, while a rear door 11 is disposed on the rear door aperture 3b. The front door 10 is pivotally supported by the front pillar 5 and rotatable via upper and lower hinge members 12, 12. Furthermore, the rear door 11 is pivotally supported by the center pillar 8 and rotatable via upper and lower hinge members 13,13.

The front door 10 has a structure that a door outer panel 14 and a door inner panel 15 are connected to form a door main body 16 having a hollow inside, and a sash frame 17 for guiding and supporting a window glass 17a is connected to a door main body 16. When viewed in the vehicle longitudinal direction, this door inner panel 15 is disposed so that a front wall 15a of the door inner panel 15 is opposed to a rear-side wall 5c of the front pillar 5 (see Fig. 3) and an inner half of the rear wall 15b is opposed to a front-side wall 8c of the center pillar 8.

A beltline reinforcement 20 is disposed along a beltline L in the door main body 16. This beltline reinforcement 20 is formed by joining together outer peripheral edges of an outer reinforcement 18 having a hat-shaped vertical cross section and a plate-like inner reinforcement 19 by welding, thereby forming a closed cross section A which has a vertically long rectangular shape and extends in the vehicle longitudinal direction.

When viewed from the vehicle side, the beltline reinforcement 20 has a structure that a lower-side portion thereof is slightly inclined toward the lower front so that the vertical dimension on the vehicle front side is larger than that of the rear side, and the front end portion of the beltline reinforcement 20 is positioned substantially at the same height position as that of the upper-side hinge member 12.

The beltline reinforcement 20 is connected to the door inner panel 15 by welding. Thus, a first closed cross section A constituted solely by the beltline reinforcement 20 and a second closed cross section B constituted by the beltline reinforcement 20 and the door inner panel 15 are formed in the door main body 16 so as to be continuous over the whole length of the beltline L. Consequently, door rigidity in the beltline L portion can be largely increased, and a bending due to a cross-sectional collapse upon a collision can be prevented.

The rear door 11 has a structure that a door outer panel 21 and a door inner panel 22 are connected to form a door main body 23 having a hollow inside, and a sash frame (not shown) is connected to a door main body 23. This structure is substantially the same as that of the front door 10.

A rear beltline reinforcement 24 having a hat-shaped vertical cross section is disposed along the beltline L in the door main body 23. An outer peripheral edge of this rear beltline reinforcement 24 is connected to the door inner panel 22 by welding. These rear beltline reinforcement and the door inner panel 24, 22 form a closed cross section having a length over the whole length of the door main body 23.

The front pillar 5 has a structure that a pillar reinforcement 28 having a hat-shaped horizontal cross section is disposed between a pillar outer 26 having a hat-shaped horizontal cross section and a plate-like pillar inner 27 blocking an opening thereof substantially along a pillar outer 26, and front and rear edge portions 5a, 5b thereof are connected together by spot welding. Thus, a square cylindrical closed cross section extending in the vertical direction is formed.

Left and right end portions of a cowl top panel 53 extending in the vehicle width direction are connected to the central portions of the left and right front pillars 5 in the vertical direction. Furthermore, rear end portions 30a of an apron reinforcement 30 extending in the vehicle longitudinal direction are connected to the left and right front pillars 5 at the central portions thereof in the vertical direction. Left and right end portions of a radiator support 52 extending in the vehicle width direction are connected to front end portions 30b of the left and right apron reinforcements 30. An engine unit, ABS actuator, steering gearbox and so forth, which are not shown, are mounted in an engine room surrounded by the radiator support 52, the left and right apron reinforcements 30 and the cowl top panel 53.

When viewed from the vehicle side, the apron reinforcement 30, beltline reinforcement 20 and rear beltline reinforcement 24 are disposed substantially at the same height positions in series so as to substantially form a line in the vehicle longitudinal direction (see Fig. 1). Thus, an input upon a vehicle collision is transmitted from the apron reinforcement 30 to the rear beltline reinforcement 24 via the front pillar 5, the beltline reinforcement 20 and the center pillar 8 and allowed to escape from the rear pillar 9 to the rear portion of body.

A fender 27a extending forward is formed integrally with the pillar inner 27, a cowl side panel 50 is connected to a front end edge of the fender 27a, and a strut support 51 is connected to the front side of the cowl side panel 50.

The apron reinforcement 30 is formed so that a vertical dimension becomes smaller from the rear end portion 30a thereof toward the front end portion 30b side, and the whole periphery of the rear end portion 30a is arcwelded to an outside wall 26a of the pillar outer 26. Consequently, the rear end portion 30a is prevented from being loosened from the front pillar 5 due to an impact load.

Furthermore, the apron reinforcement 30 is provided with a bend line "a" extending in the vertical direction. This bend line "a" is set at a position which is in front of the front end surface of the pillar outer 26 and faces a rear end of the cowl side panel 50.

When viewed in a plan view, a portion a1 of the apron reinforcement 30 on the rear side of the bend line "a" as an origin is formed so as to constitute a line substantially in parallel to a vehicle center line. A portion a2 on the front side of the bend line "a" is bent so as to be inclined toward the inside of the vehicle.

Furthermore, a reinforcing bead portion 30d extending to a half way toward the front from the bend line "a" as the origin is formed in the front side portion a2 of the apron reinforcement 30, and the reinforcing bead portion 30d is formed to protrude toward the outside of the vehicle. Thus, the rear side portion a1 of the apron reinforcement 30 between the strut support 51 and the front pillar 5 serves as a crush zone. It is noted that the reinforcing bead portion may be depressed toward the inside of the vehicle.

A patch 40 is disposed between the pillar outer 26 and the pillar reinforcement 28 of the front pillar 5 and fixed by welding. This patch 40 is a substantially L-shaped plate, positioned at the same height position as that of the beltline reinforcement 20, disposed only at a corner portion from the outside wall 5d portion to the rear-side wall 5c between the pillar outer 26 and the pillar reinforcement 28, and shaped so as not to be present inside of the corner portion of the rear-side wall 5c. Since the patch 40 having such a shape is disposed, only rigidity of the outside wall 5d portion of the front pillar 5 is increased and rigidity of the rear-side wall 5c is relatively low.

A bulkhead 33 is disposed in a joint portion to the apron reinforcement 30 within the front pillar 5. This bulkhead 33 effectively transmits an input upon a collision from the apron reinforcement 30 to the front pillar 5 and the beltline reinforcement 20. As shown in Fig. 7, three box cross sections y extending in the vehicle longitudinal direction are formed by joining together a first reinforcement 34, which has a U-shaped cross section and opens to the outside of the vehicle and a second reinforcement 35, which has a U-shaped cross section and opens to the inside of the vehicle.

The first reinforcement 34 has a structure that lateral-side walls 34d, 34d extending toward the outside of the vehicle are bent on upper and lower edges of an inside wall 34c, while upper and lower flanges 34a, 34b are bent on outside edges of the lateral-side walls 34d. Furthermore, in the second reinforcement 35, lateral-side walls 35d, 35d extending toward the inside of the vehicle are bent on upper and lower edges of the outside wall 35c, while upper and lower flanges 35a, 35b are bent on inside edges of the lateral-side walls 35d.

The upper and lower flanges 34a, 34b of the first reinforcement 34 are overlapped with the inside wall surface of the pillar reinforcement 28 together with the pillar outer 26 and patch 40, and these four components are connected together by welding. The outside wall 35c of the second reinforcement 35 is overlapped with the inside wall surface of the pillar reinforcement 28 together with the pillar outer 26 and the patch 40 and these four components are connected together by welding. The upper and lower flanges 35a, 35b are fixed to the pillar inner 27 by bolting together with the inside wall 34c of the first reinforcement 34.

The center pillar 8 has a structure that a pillar reinforcement 39 having a hat-shaped horizontal cross section is disposed between a pillar outer 37 and a pillar inner 38 both having a hat-shaped horizontal cross section generally along the pillar outer 38, and front and back edges 8a, 8b of these three components are overlapped and connected together by spot welding.

A front end portion 20a and a rear end portion 20b of the beltline reinforcement 20 of the front door 10 have substantially a pointing shape in a plan view since front and rear edges of the outer reinforcements 18 are connected with those of the inner reinforcements 19, respectively.

Furthermore, the front and rear end portions 20a, 20b extend to a position directly close to front and rear walls 15a, 15b of the door inner panel 15, connected to front and rear corner portions of an inside wall 15c of the door inner panel 15 by welding. When viewed in the vehicle width direction, these front and rear end portions 20a, 20b are overlapped with the sash frame 17 connected to the front and rear walls 15a, 15b of the door inner panel 15 at a distant position. Consequently, the beltline reinforcement 20 wedgingly engages the front pillar 5 without interfering with the sash frame 17 upon a collision, and a stable engagement can be obtained.

The front end portion 20a is opposed to a central portion of the rear-side wall 5c of the front pillar 5 in the vehicle width direction, while the rear end portion 20b is opposed to a central portion in the vehicle width direction of the front-side wall 8c of the center pillar 8. Thus, engagement upon a collision can be reliably obtained by securing a large lapping margin W of each pillar 5, 8 and the beltline reinforcement 20.

Furthermore, a predetermined gap L is provided between the rear wall 5c of the front pillar 5 and the front wall 15a of the front door 10. This gap L is set to be as small as possible, for example, 5 mm or smaller. By minimizing the gap L, an input can be effectively transmitted to the front pillar 5 and the front door 10, and deformation of a corner portion of the door inner panel 15 can be prevented. Furthermore, front and rear stages 15d, 15e of the inside wall 15c of the door inner panel 15 have an inclined shape, and interference with the front pillar 5 and the center pillar 8 is prevented upon a collision.

A cut-out recessed portion 33a is formed in a rear end portion of each lateral-side wall 34d, 35d of the bulkhead 33. This cut-out recessed portion 33a is set to have a width covering a half or more dimension of the lateral-side wall 34d, 35d in the vehicle width direction and a depth which does not interfere when the front end portion 20a of the beltline reinforcement 20 wedgingly engages.

A predetermined gap L1 is provided between the pillar outer 37 and the pillar reinforcement 39 forming the front wall 8c and the rear wall 8d, respectively, of the center pillar 8. This gap L1 is set to be 3 mm or smaller. Since the gap L1 is set at a small value as described above, an input can be effectively transmitted to the front door 10, center pillar 8 and rear door 11.

Furthermore, a predetermined gap L2 is provided between the center pillar 8 and the front door 10 and between the center pillar 8 and the rear door 11. This gap L2 is set to be 5 mm or smaller, and an input can be effectively transmitted as in the above case.

A substantially U-shaped patch 43 is provided on the outside wall 8e of the center pillar 8. This patch 43 is disposed substantially at the same height position as that of the beltline reinforcement 20 and the rear beltline reinforcement 24, disposed only at a corner portion from the outside wall 8e portion between the pillar outer 37 and the pillar reinforcement 39 to the front-side wall 8c and the rear-side wall 8d, shaped so as not to be present inside the corner portions of the front-side wall 8c and the rear-side wall 8d and connected to the pillar outer 37 and the pillar reinforcement 39 by welding. Consequently, only rigidity of the outside wall 8e portion of the center pillar 8 is increased, and the rigidity of the rear-side wall 8d and the front-side wall 8c is lower than that of the outside wall 8e.

The front end portion 24a and the rear end portion 24b of the rear beltline reinforcement 24 of the rear door 11 extend to positions directly close to the front and rear walls 22a, 22b of the door inner panel 22 and are connected to the front and rear corner portions of the inside wall 22c of the door inner panel 22 by welding.

A predetermined gap L3 is provided between the rear pillar 9 and rear door 11. This gap L3 is set to be 5 mm or smaller. By minimizing this gap L3, displacement and loosening of the rear door 11 toward the outside can be prevented, and an input can be reliably allowed to escape to the rear upon a collision.

Furthermore, an extending portion 45a of a rear door lock reinforcement 45 is disposed in a portion of the rear pillar 9 which is opposed to the rear beltline reinforcement 24. Consequently, a working face of the rear beltline reinforcement 24 can be reinforced, large displacement of the beltline reinforcement 24 toward the rear can be prevented, and an input can be effectively transmitted to the rear pillar 9. Furthermore, since the extending portion 45a only needs to be formed in an existing rear door lock reinforcement 45, the number of components does not need to be increased.

Effects of the embodiment are explained below.

An input upon a frontal-impact vehicle collision is transmitted from the apron reinforcement 30 to the beltline reinforcement 20 of the front door main body 16 via the front pillar 5, from the beltline reinforcement 20 to the center pillar 8, further from the center pillar 8 to the rear beltline reinforcement 24 of the rear door main body 23 and finally to the rear of the vehicle body via the rear pillar 9.

In this case, along with relative displacement of the front door main body 16 in the longitudinal direction, the front and rear end portions 20a, 20b of the beltline reinforcement 20 hit portions on the inside of the vehicle of the rear-side wall 5c of the front pillar 5 and the front-side wall 8c of the center pillar 8, respectively. Furthermore, rigidity of the outside walls 5d, 8e of the front pillar 5 and the center pillar 8 is increased by adding the patches 40, 43 to the outside walls 5d, 8e, while rigidity of the rear-side wall 5c and the front-side wall 8c is relatively decreased.

Consequently, portions of the beltline reinforcement 20 of the front and rear walls 15a, 15b of the door inner panel 15 which are opposed to the outside walls 5d, 8e and outside of the front and rear end portions 20a, 20b are depressed, deformed substantially into a Z shape as a whole and wedgingly engages the front pillar 5 and the center pillar 8 (see the alternate long and two short dashes line in Figs. 10 and 11). As a result, displacement of the beltline reinforcement 20 toward the outside in the vehicle width direction is restricted, and the beltline reinforcement 20 serves as a support and transmits an input to the rear beltline reinforcement 24 of the rear door 11. The rear beltline reinforcement 24 also pierces and wedgingly engages the rear-side wall 8d of the center pillar 8 as in the above case, and transmits an input to the rear pillar 9 so as to be allowed to escape to the rear of the vehicle body. Then, engagement of each door main body 16, 23 is released by spring back of the vehicle body at the end of the collision, and hence the door can be opened.

Thus, according to the vehicle body structure of this embodiment, since the front and rear end portions 20a, 20b of the beltline reinforcement 20 of the front door 10 extend so as to be brought into contact with the front and rear walls 15a, 15b of the door inner panel 15 of the door main body 16, and rigidity of the outside wall 8e of the center pillar 8 and the outside wall 5d of the front pillar 5 is increased while rigidity of the rear-side wall 5c and the front-side wall 8c is made relatively low, the beltline reinforcement 20 pierces and wedgingly engages the front pillar 5 and the center pillar 8 upon a vehicle collision as described above, and hence displacement of the beltline reinforcement 20 toward the outside is restricted. As a result, even when the front pillar 5 is distorted and deformed toward the inside of the vehicle, the door main body 16 is not loosened due to slippage and, as a result, an input can be reliably transmitted to the rear portion of the vehicle body.

Furthermore, as in the above case, since the front and rear end portions 24a, 24b of the rear beltline reinforcement 24 of the rear door 11 extend so as to be brought into contact with door main body 23, and rigidity of the outside wall 8e of the center pillar 8 is increased while rigidity of the rear-side wall 8d is made relatively low, and the front end portion 24a pierces and wedgingly engages the rear-side wall 8d of the center pillar 8 upon a vehicle collision, loosening of the door main body 23 toward the outside is prevented, and an input can be reliably transmitted to the rear pillar 9.

In the above embodiment, a case where rigidity of the outside walls 5d, 8e is increased by adding the patches 40, 43 to the front pillar 5 and the center pillar 8 has been explained, but the present invention is not limited to this method.

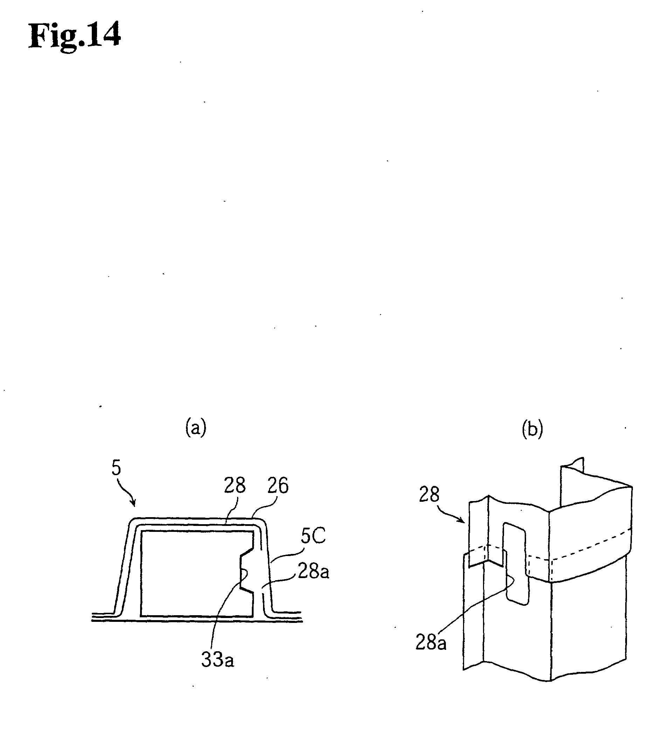

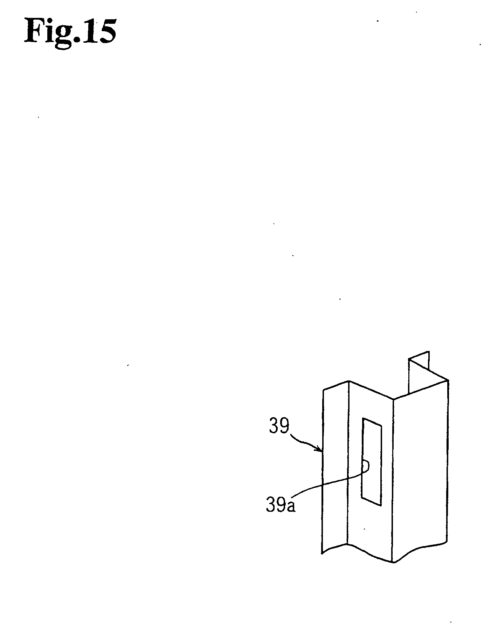

For example, as shown in Figs. 14 and 15, rigidity of the front-side wall 8c and the rear-side wall 5c of the center pillar 8 of the front pillar 5 may be made relatively low by forming escape holes 28a, 39a having a size enough to insert the beltline reinforcement 20 in the pillar reinforcement 28 of the front pillar 5 and the pillar reinforcement 39 of the center pillar 8. In this case, an engagement of the beltline reinforcement 20 is made easy and reliable. Furthermore, the additions of the patches and the escape holes may be combined.

According to this embodiment, since the bulkhead 33 is disposed in the joint portion to the apron reinforcement 30 within the front pillar 5, rigidity of the apron reinforcement joint portion of the front pillar 5 can be increased, a cross-sectional collapse of the front pillar 5 upon a collision can be prevented, and an input can be reliably transmitted to the beltline reinforcement 20.

Furthermore, according to this embodiment, a cut-out recessed portion 33a is formed in each lateral-side wall 34d, 35d of the bulkhead 33, the cut-out recessed portion 33a serves as an escape upon an engagement of the beltline reinforcement 20. Therefore, the beltline reinforcement 20 easily wedgingly engages the rear-side wall 5c of the front pillar 5, loosening of the door main body 16 is prevented, and an input can be more reliably transmitted to the rear of the vehicle body.

According to the vehicle body structure of this embodiment, since a bend line "a" is set in front of the front end surface of the front pillar 5 in the apron reinforcement 30, the portional of the apron reinforcement 30 on the rear side of the bend line "a" as an origin is formed substantially in parallel to the vehicle center line, a portion in the front side portion a2 is slightly inclined toward the inside of the vehicle, and, furthermore, a reinforcing projected bead portion 30d extending forward from the bend line "a" as an origin is formed, the front side portion a2 of the apron reinforcement 30 on the front side of the bend line "a" is bent and deformed toward the inside of the vehicle due to a load upon a collision, and, along with this, a deformation mode of protruding toward the outside of the vehicle is induced in the rear side portion a1. As a result, since the load transmitted through the outside of the apron reinforcement 30 is inputted to the outside of the front pillar 5, an inverse torsional moment, which stops rotation toward the inside of the vehicle, acts on the front pillar 5, and distortion of the front pillar 5 can be made small. Consequently, displacement of the front door 10 toward the outside of the vehicle can be avoided, and an input can be reliably transmitted to the beltline reinforcement 20.

Furthermore, in this embodiment, the rear side portion a1 of the apron reinforcement 30 is provided with a crush zone, a crash stroke can be secured when a rigid body such as an engine unit or the like is mounted on the front side portion a2, and distortion of the front pillar 5 toward the inside of the vehicle can be prevented by effectively utilizing the rear side portion a1.

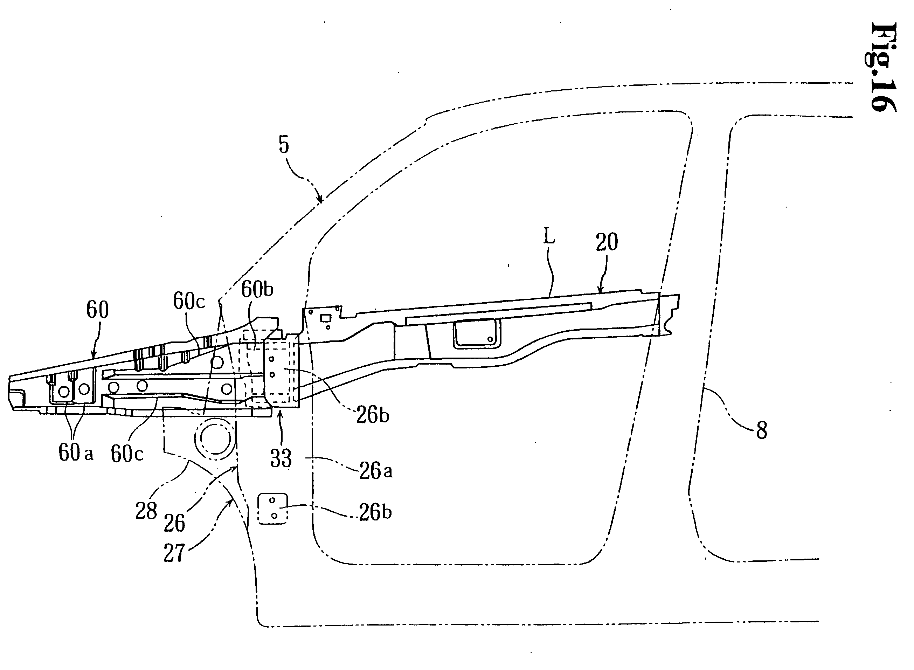

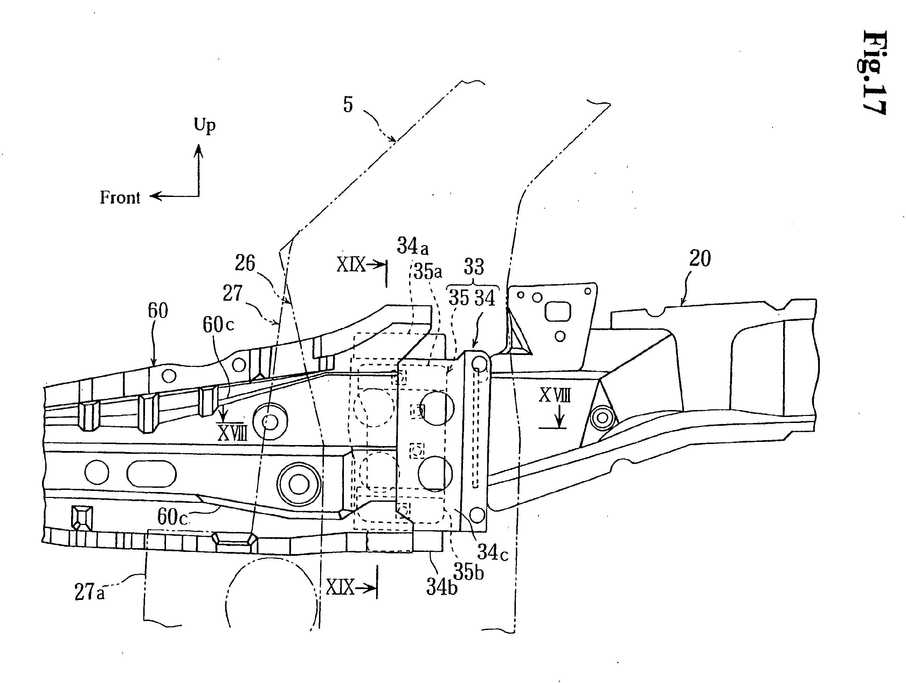

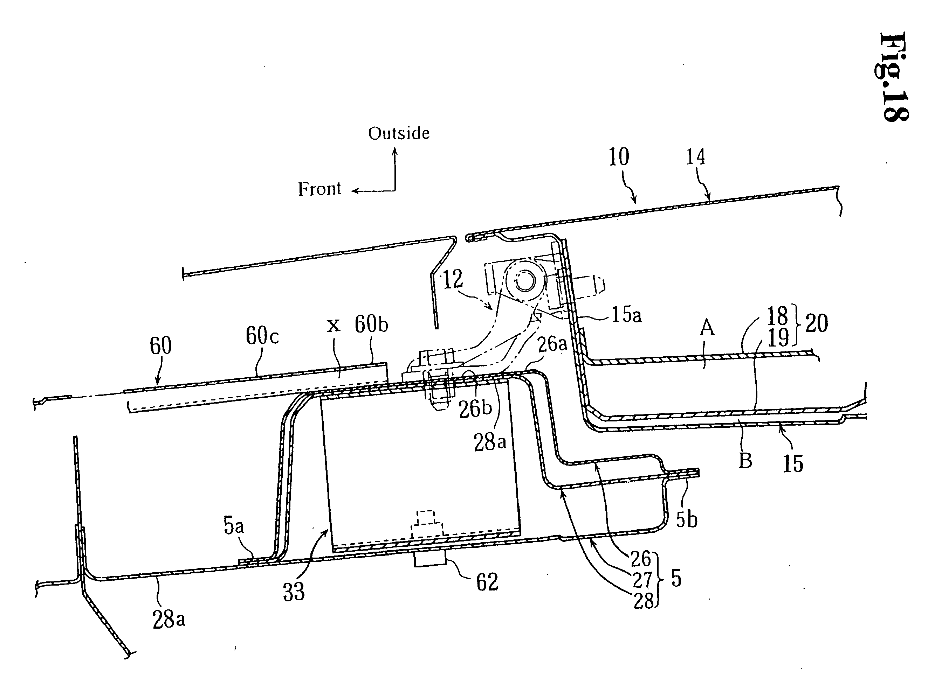

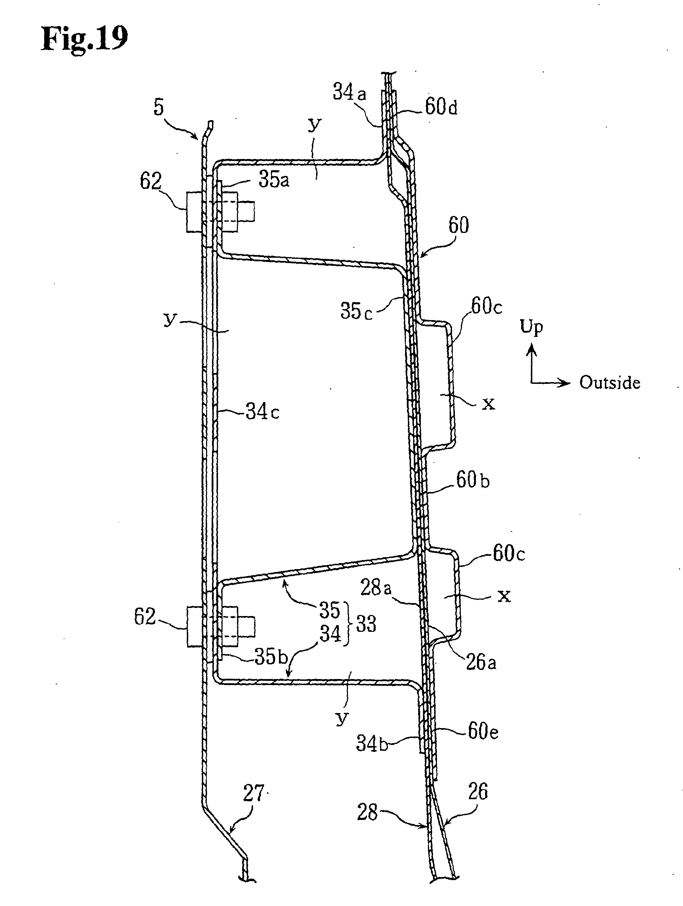

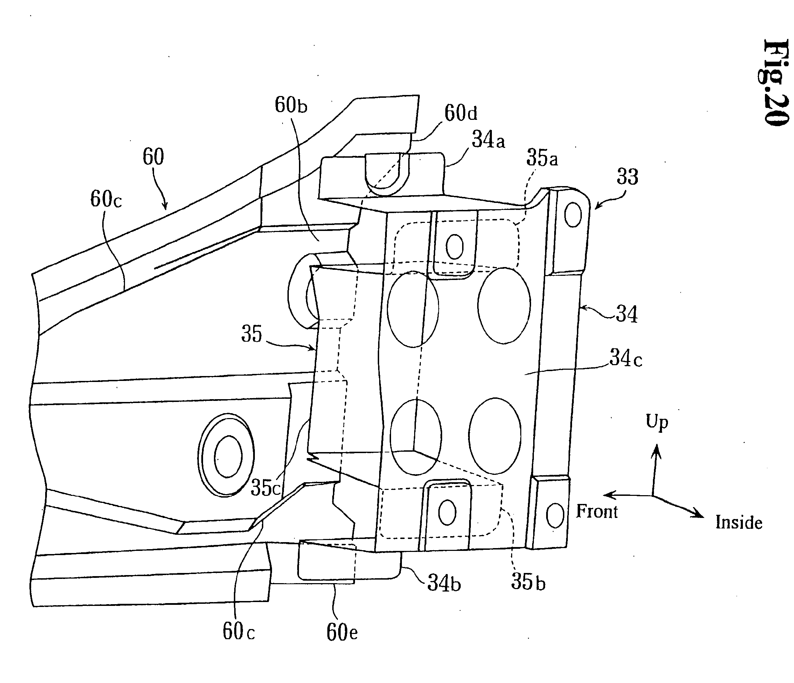

Figs. 16 to 20 are views for explaining a vehicle body structure according to one embodiment (second embodiment) of eighth to thirteenth aspect of the invention. In the figures, like reference numerals denote like or corresponding components in Figs. 1 to 8.

The vehicle body structure of this embodiment is constituted such that a rear end portion of an apron reinforcement 60 extending in the vehicle longitudinal direction is connected to a front pillar 5 extending in the vehicle vertical direction and specifically has the following structure.

An extending portion 60b extending to the rear is formed integrally with the rear end portion of the apron reinforcement 60, and the extending portion 60b extends toward an outside wall 26a of a pillar outer 26 and is made adjacent to an upper-side hinge mounting plate 26b of the outside wall 26a.

Upper and lower protruded bead portions 60c, 60c extending in the vehicle longitudinal direction are formed in this extending portion 60b. Each of these bead portions 60c extends from the extending portion 60b of the apron reinforcement 60 to a position close to a front buckling bead 60a.

The extending portion 60b is overlapped with the outside wall 26a of the pillar outer 26 together with an outside wall 28a of a pillar reinforcement 28, and three of these components are connected together by spot welding. Consequently, upper and lower box cross sections x, x are formed in a joint portion of the apron reinforcement 60 and the front pillar 5, and each of these box cross sections x extends from the joint portion toward the front of the vehicle over the front pillar 5. The apron reinforcement 60 is connected by spot welding at two positions of upper and lower edges 60d, 60e and a central portion thereof.

A bulkhead 33 is disposed in the joint portion to the apron reinforcement 60 within the front pillar 5 is provided. This bulkhead 33 is made of a sheet metal and constituted such that three box cross sections y extending in the vehicle longitudinal direction are formed by joining together a first reinforcement 34 having a U-shaped vertical cross section opening to the outside of the vehicle and a second reinforcement 35 having a U-shaped vertical cross section opening to the inside of the vehicle.

Upper and lower flanges 34a. 34b are bent on an opening edge of the first reinforcement 34, and the flanges 34a, 34b are overlapped with the upper and lower edges 60d, 60e of the apron reinforcement 60 together with the pillar outer 26 and the pillar reinforcement 28, and these four components are connected together by spot welding.

Furthermore, upper and lower flanges 35a, 35b are bent on an opening edge of the second reinforcement 35, and the flanges 35a, 35b are connected to an inner wall 34c of the first reinforcement 34 by spot welding. Furthermore, an upper-side hinge member 12 is fixed to an outer wall 35c of the second reinforcement 35 by bolting together with the pillar reinforcement 28 and the pillar outer 26.

A joint portion of each of the flanges 35a, 35b of the second reinforcement 35a and the inner wall 34c of the first reinforcement 34 is fastened to the pillar inner 27 with a bolt 62.

Furthermore, when viewed from the side of the body, the apron reinforcement 60 and the beltline reinforcement 20 are positioned substantially at the same height position so as to be continuous in the longitudinal direction. An input from the front of the vehicle is transmitted from the apron reinforcement 60 to the beltline reinforcement 20 of the door main body 16 via the front pillar 5 and from the beltline reinforcement 20 to the center pillar 8.

Effects of this embodiment are explained below.

According to the vehicle body structure of this embodiment, since a bead portion 60c is formed in the extending portion 60b of the apron reinforcement 60, the extending portion 60b is connected to the outside wall 26a of the pillar outer 26, and upper and lower box cross sections x extending in the vehicle longitudinal direction are formed in the joint portion, the rigidity and bearing force of the joint portion of the apron reinforcement 60 and the front pillar 5 against an input from the front of the vehicle due to a collision can be increased, and rotation of the front pillar 5 toward the inside of the vehicle can be prevented. As a result, the input can be transmitted from the apron reinforcement 60 to the beltline reinforcement 20 via the front pillar 5, and influence on the vehicle interior upon a collision can be prevented. Furthermore, since the apron reinforcement 60 is connected to the front pillar 5 at four positions in the vertical direction by spot welding, the number of welded positions increases and hence joint rigidity can be improved.

In this embodiment, since a bead portion 60c is formed on the apron reinforcement 60, a bulkhead 33 having a box cross section y extending in the vehicle longitudinal direction is disposed in the front pillar 5, the upper and lower flanges 34a, 34b of the first reinforcement 34 of the bulkhead 33 are overlapped with the apron reinforcement 60, pillar outer 26 and pillar reinforcement 28, and these four components are connected together, the joint portions of the flanges 35a, 35b of the second reinforcement 35 and the inner wall 34c of the first reinforcement 34 are fastened to the pillar inner 27, the rigidity and bearing force of the joint portion of the apron reinforcement 60 and the front pillar 5 can be further increased, and a fall of the front pillar 5 toward the inside of the vehicle can be reliably prevented.

In this embodiment, since the beltline reinforcement 20 connected in the door main body 16 and the apron reinforcement 60 are positioned substantially at the same height position and made continuous in the longitudinal direction, an input from the front of the vehicle can be reliably transmitted from the apron reinforcement 60 to the beltline reinforcement 20 via the front pillar 5 and allowed to escape to the rear of the body, and influence on the vehicle interior upon a collision can be prevented.

Furthermore, since the bead portion 60c of the apron reinforcement 60 is extended from the joint portion of the front pillar 5 toward the front of the vehicle, the bearing force of the apron reinforcement 60 itself can be increased, and a fall toward the inside of the vehicle can be reliably prevented.

Furthermore, since upper and lower bead portions 60c of the apron reinforcement 60 are formed, the bearing force of the joint portion of the apron reinforcement 60 against an input can be further increased.

In this embodiment, the bulkhead 33 has three box cross sections y by joining together the first and second reinforcements 34, 35 having a U-shaped cross section, and the outer wall 35c of the second reinforcement 35 is connected to the hinge mounting plate 26b of the pillar outer 26, the mounting rigidity of the hinge member 12 can be increased, and displacement of the door main body 16 toward the outside of the vehicle upon a collision can be prevented.

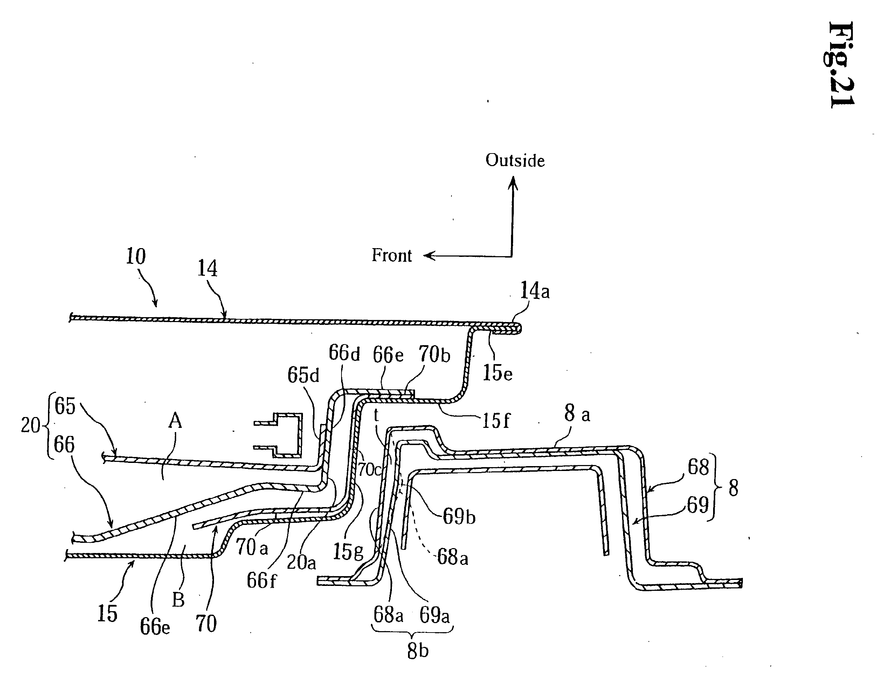

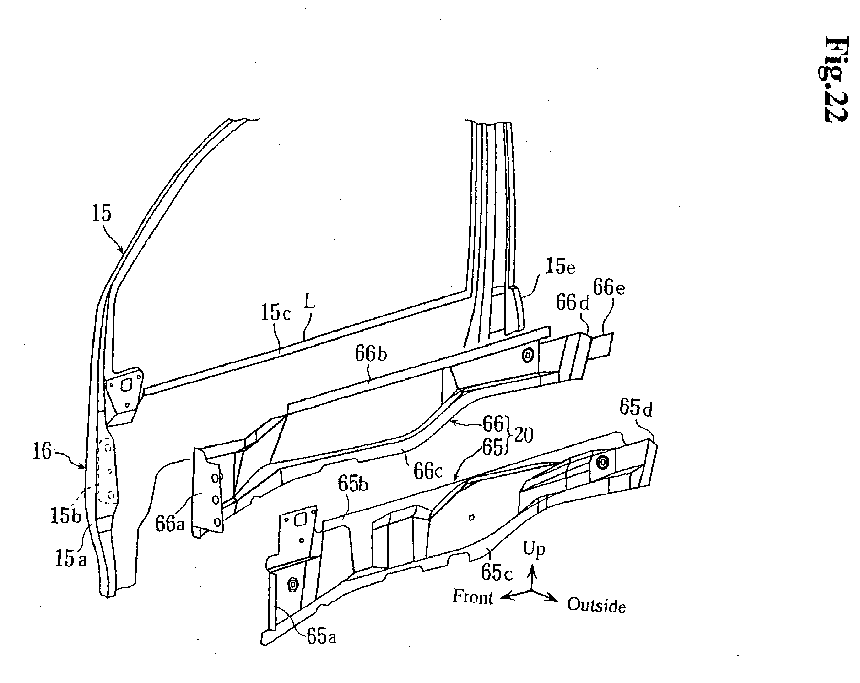

Figs. 21 and 22 are views for explaining a vehicle body structure of an automobile according to one embodiment (third embodiment) of fourteenth to seventeenth aspects of the invention. In the figures, like or corresponding components are designated by like reference numerals in Figs. 1 to 8.

The vehicle body structure of this embodiment is constituted such that a beltline reinforcement 20 is disposed along a beltline L in a door main body 16 and specifically has the following structure.

The beltline reinforcement 20 is formed by joining together an outer reinforcement 65 and an inner reinforcement 66 having a hat-shaped vertical cross section at front end portions 65a, 66a, rear end portions 65d, 66d, upper edges 65b, 66b and lower edges 65c, 66c thereof connected to each other by spot welding so as to form a hollow inside. Consequently, a closed cross section A having a vertically long rectangular shape extending in the vehicle longitudinal direction is formed.

When viewed from the outside of the vehicle, the lower side of the beltline reinforcement 20 is smoothly inclined toward lower front so that upper and lower dimensions on the front side of the vehicle are larger than those of the rear side, and a front end surface of the beltline reinforcement 20 is opposed to a rear end surface of the apron reinforcement (not shown). Consequently, an input upon a collision can be transmitted from the apron reinforcement to the beltline reinforcement 20 via the front pillar.

The upper edges 65b, 66b of the beltline reinforcement 20 are connected to the door glass opening edge 15c of the door inner 15, and the lower edges 65c, 66c are connected to an inner wall of the door inner 15.

Thus, in the beltline L of the door main body 16, a first closed cross section A constituted solely by the beltline reinforcement 20 and a second closed cross section B constituted by the beltline reinforcement 20 and the door inner 15 are formed so as to be continuous over the whole length of the beltline L of the door main body 16. Consequently, door rigidity in the beltline L portion can be largely increased, a cross-sectional collapse upon an offset collision can be prevented, and deformation of the door upon a collision can be prevented.

Furthermore, the front end portions 65a, 66a of the beltline reinforcement 20 are bent toward the outside in the vehicle width direction, and the front end portions 65a, 66a are connected to an upper-side hinge mounting plate 15b formed on the front wall 15a of the door inner 15.

The center pillar 8 has a structure that a pillar reinforcement 69 having a hat-shaped horizontal cross section is inserted between a pillar outer 68 and a pillar inner (not shown) having a hat-shaped horizontal cross section substantially along the pillar outer 68, and front and rear edges of these three components are overlapped with each other and connected together by spot welding.

Furthermore, a rear end edge 15e of the door inner 15 is connected to a rear end edge 14a of a door outer 14 by a hemming process. Furthermore, a rear vertical wall 15f extending from the rear end edge 15e while bent toward the inside in steps so as to be substantially opposed to the outside wall 8a of the center pillar 8 and a rear horizontal wall 15g extending continuously to the rear vertical wall 15f while bent toward the inside so as to be substantially opposed to the front wall 8b of the center pillar 8 are formed in the door inner 15.

A door lock reinforcement 70 formed substantially along the rear end portion of the door inner 5 is disposed in the rear end portion in the door main body 16. An extending portion 70a extending so as to surround the rear of the beltline reinforcement 20 is formed integrally with this door lock reinforcement 70.

The rear end portion of the beltline L in the door main body 16 has the following structure.

The outer reinforcement 65 of the beltline reinforcement 20 extends substantially in a line over the whole length, and a flange 65d bent toward the outside of the vehicle is formed at the rear end portion of the outer reinforcement 65. Furthermore, a first flange 66d bent toward the outside of the vehicle and a second flange 66e bent toward the rear side of the vehicle following the first flange 66d are formed at the rear end portion of the inner reinforcement 66. This second flange 66e is connected to the rear vertical wall 15f of the door inner 15 with a rear flange 70b of the extending portion 70a of the door lock reinforcement 70 by spot welding.

Furthermore, the flange 65d of the outer reinforcement 65 is connected to the first flange 66d by spot welding, and a gap communicated with the second closed cross section B is provided between the first flange 66d and the rear horizontal wall 15g of the door inner 15.

An inclined portion 66e extending while inclined so that a gap with the outer reinforcement 65 is narrower in the vehicle width direction toward the rear side and a pointing portion 66f extending continuously with the inclined portion 66e substantially in parallel to the outer reinforcement 65 are bent in the rear end portion of the inner reinforcement 66. A rear end surface 20a formed by this pointing portion 66f, the first flange 66d and the outer reinforcement 65 is opposed to a central portion in the vehicle width direction of the front wall 8b of the center pillar 8.

A gap "t" of about 2 - 4 mm is provided between front walls 68a, 69a of a pillar outer 68 and a pillar reinforcement 69 forming the front wall of the center pillar 8. This gap "t" is set to be 4-5 times of the plate thickness of the pillar outer 68 and the pillar reinforcement 69, specifically 3 mm.

An escape hole 70c is scooped out in a portion facing the rear end surface 20a of the extending portion 70a of the door lock reinforcement 70. This escape hole 70c is set to be in a size enough to insert the rear end surface 20a of the beltline reinforcement 20 without interfering when the beltline reinforcement 20 is disposed toward the rear.

Furthermore, a bend portion 69b having a doglegged shape in a plan view is formed in the front wall 69a of the pillar reinforcement 69. The bend portion 69b is opposed to the rear end surface 20a of the beltline reinforcement 20.

Effects of this embodiment are explained below. For example, an input due to an impact upon an offset collision is transmitted from the apron reinforcement to the beltline reinforcement 20 of the door main body 16 via the front pillar and from the beltline reinforcement 20 to the center pillar 8. In this case, the beltline reinforcement 20 is disposed toward the rear along with displacement of the door main body 16 toward the rear, inserted into the escape hole 70c of the door lock reinforcement 70 and pierces the front wall 8b of the center pillar 8. Then, the front wall 68a of the pillar outer 68 is depressed and deformed into a doglegged shape in a plan view and hits and wedgingly engages the bend portion 69b of the pillar reinforcement 69 (see a broken line in Fig. 21). Consequently, displacement of the beltline reinforcement 20 in the vehicle width direction is restricted, and the input is transmitted to the center pillar 8.

Thus, according to this embodiment, since the beltline reinforcement 20 solely constitutes a structure having a closed cross section in a vertically long rectangular shape and the rear end portion of the beltline reinforcement 20 has a pointing portion 66f shape, which becomes narrower in the vehicle width direction toward the rear side, the pointing portion 66f pierces and wedgingly engages the central portion in the vehicle width direction of the center pillar 8 due to an input from the front of the vehicle. As a result, an input upon a collision can be reliably transmitted to the center pillar 8 via the beltline reinforcement 20, and influence on the vehicle interior can be avoided.

Furthermore, since displacement in the vehicle width direction is restricted by allowing the pointing portion 66f of the beltline reinforcement 20 to wedgingly engage the center pillar 8, corner portions of the first and second flanges 15g, 15f of the door inner 15 can be prevented from extending, and displacement in the vehicle width direction can also be prevent by this constitution.

Since a gap "t" of about 2-4 mm is provided between the outer pillar 68 and the pillar reinforcement 69 of the center pillar 8, an engagement margin to the outer pillar 68 of the beltline reinforcement 20 can be set. Consequently, while displacement of the beltline reinforcement 20 toward the outside of the vehicle is stopped, the door 10 can be opened after a collision.

In this embodiment, since a bend portion 69b is formed in the pillar reinforcement 69, an engagement when hit by the beltline reinforcement 20 can be reliably obtained, and displacement toward the outside of the vehicle can be reliably prevented.

According to this embodiment, since an extending portion 70a surrounding the rear of the beltline reinforcement 20 is formed in the door lock reinforcement 70 disposed in the door main body 16 and an escape hole 70c larger than the rear end surface 20a is formed in the extending portion 70a, the rear end surface 20a of the beltline reinforcement 20 is inserted into the escape hole 70c without interfering with the extending portion 70a and wedgingly engages the center pillar 8 reliably and easily. An input can also be more reliably transmitted to the center pillar 8 by this constitution.

Furthermore, since the rear of the beltline reinforcement 20 is surrounded by the extending portion 70a of the door lock reinforcement 70 and the rear flange 70b of the extending portion 70a is connected to the rear vertical wall 15f of the door inner 15 together with the second flange 66e of the beltline reinforcement 20, door rigidity of the rear end portion of the beltline L can be increased without increasing the number of components.

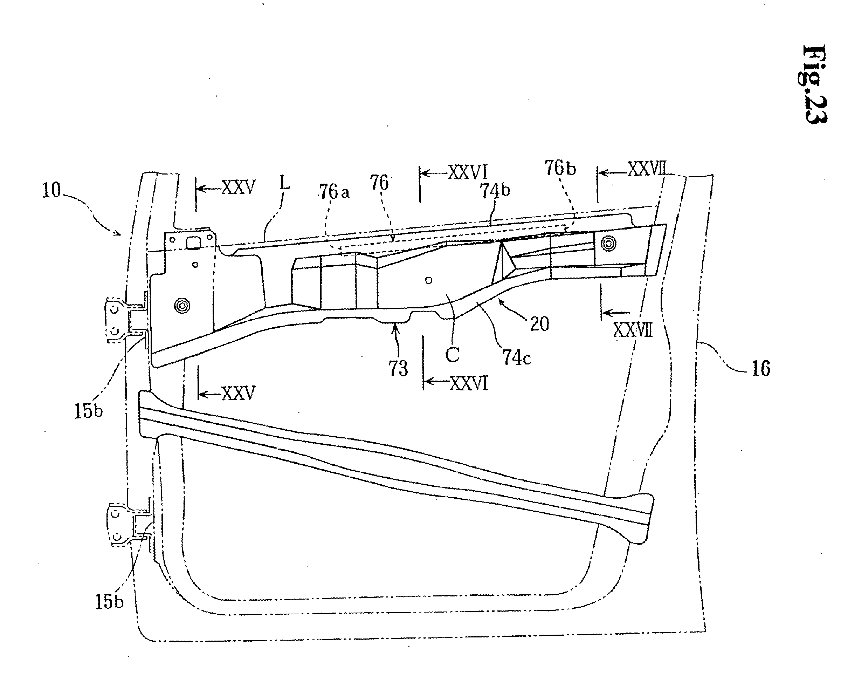

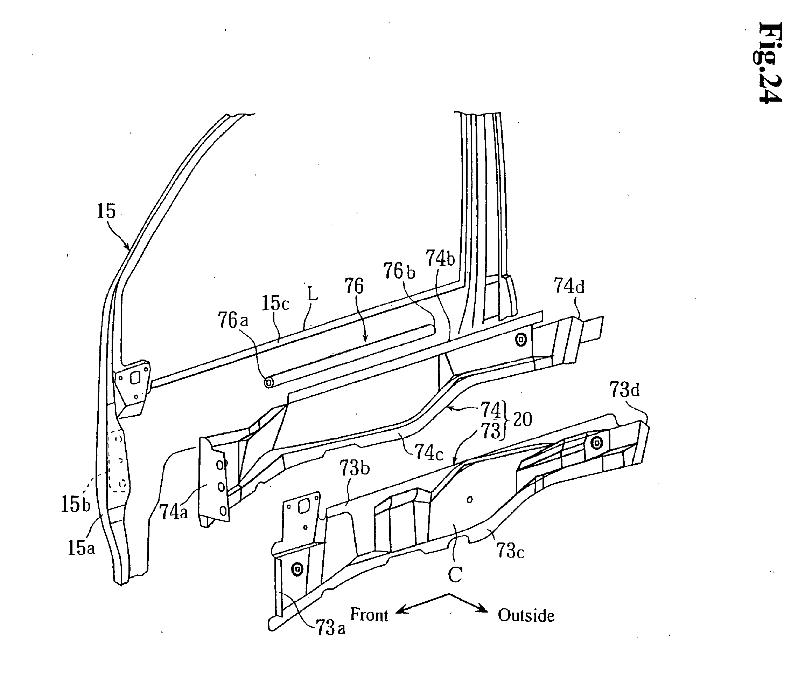

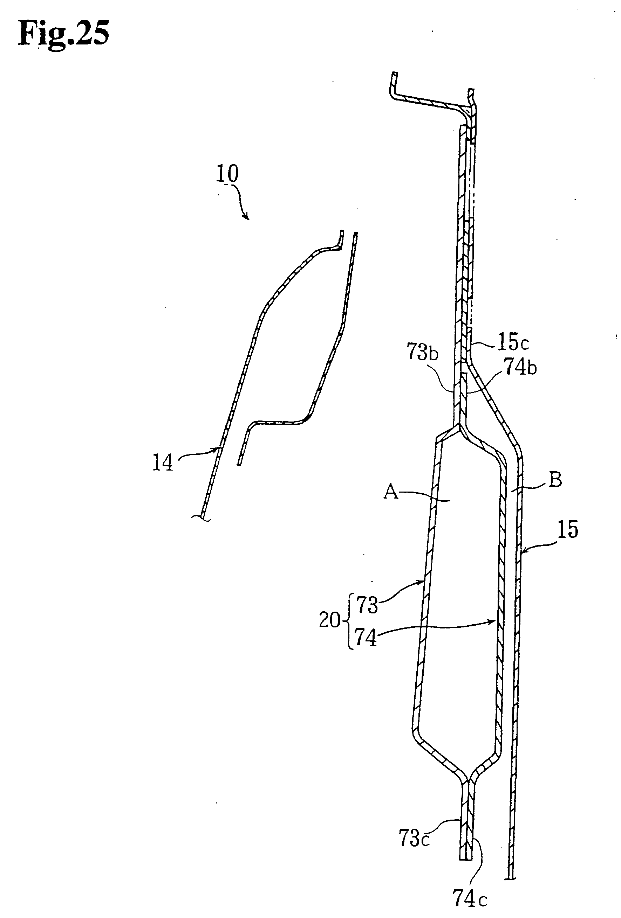

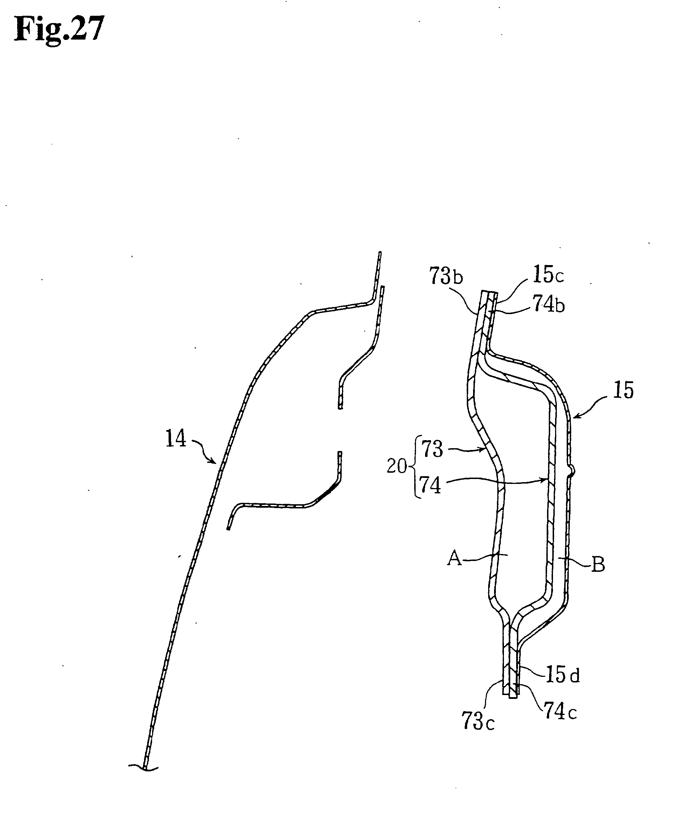

Figs. 23 to 27 are views for explaining a body structure according to one embodiment (fourth embodiment) of eighteenth to twenty first aspects of the invention. In the figures, like or corresponding components are designated by like reference numerals in Figs. 1 to 8.

The vehicle body structure of this embodiment is constituted such that a beltline reinforcement 20 is provided along a beltline L in a door main body 16 and specifically has the following structure.

The beltline reinforcement 20 is formed by joining together an outer reinforcement (vehicle outside wall) 73 and an inner reinforcement (vehicle inside wall) 74 having a hat-shaped cross section in the vehicle width direction by spot welding so as to have a hollow inside at front edges 73a, 74a, upper edges 73b, 74b, lower edges 73c, 74c and rear edges 73d, 74d connected to each other. Consequently, a closed cross section A, which extends in the longitudinal direction over the whole length of the door main body 16 and has a vertically long rectangular shape is formed.

When viewed from the side of the body, the lower-side portion of the beltline reinforcement 20 is smoothly inclined toward lower front so that the vehicle front side portion is larger than the rear side portion in the vertical direction, and the front end surface of the beltline reinforcement 20 is opposed to the rear end surface of the aforementioned apron reinforcement. Consequently, an input upon a collision can be reliably transmitted from the apron reinforcement to the beltline reinforcement 20 via the front pillar.

The upper edges 73b, 74b of the beltline reinforcement 20 are connected to the door glass opening edge 15c of the door inner 15, while the lower edges 73c, 74c are connected to the inner wall 15d of the door inner 15. Furthermore, the front edges 73a, 74a of the beltline reinforcement 20 are connected to the upper-side hinge mounting plate 15b of the door inner 15, while the rear edges 73d, 74d are connected to the rear wall (not shown) of the door inner 15.

Thus, in the beltline L portion of the door main body 16, a closed cross section A constituted solely by the beltline reinforcement 20 and a closed cross section B constituted by the beltline reinforcement 20 and the door inner 15 are formed so as to be continuous over the whole length of the beltline L of the door main body 16. Consequently, door rigidity in the beltline L portion can be largely increased, a cross-sectional collapse upon a collision can be prevented, and deformation of the door upon a collision can be prevented.

A directly matching portion C is formed in a portion of the beltline reinforcement 20 closer to the front side, which is large in upper and lower dimensions, that is, a middle portion in the longitudinal direction (vehicle longitudinal direction). This directly matching portion C is formed by depressing the outer reinforcement 73 and the inner reinforcement 74 inward and outward, respectively, so as to be brought into contact with each other only at central portions thereof in the vertical direction. Therefore, only the central portions in the vertical direction are connected while an upper-side closed cross section A1 and a lower-side closed cross section A2 remain. Here, the upper-side and lower-side closed cross sections A1, A2 are communicated with the closed cross section A in the longitudinal direction and constitute one closed cross section as a whole. Thus, since the directly matching portion C is formed in the portion closer to the front side which has a large dimension in the vertical direction, reduction of rigidity due to formation of the directly matching portion C is suppressed.

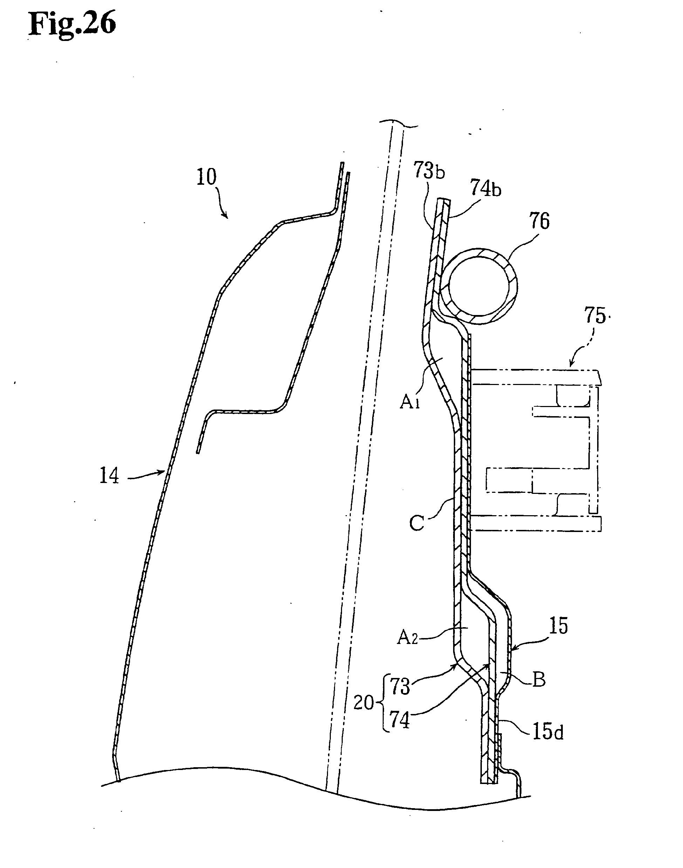

Furthermore, when viewed in the vehicle longitudinal direction (see Fig. 26), the upper-side closed cross section A1 is displaced in the vehicle width direction so as to be positioned outside of the directly matching portion C, while the lower-side closed cross section A2 is displaced in the vehicle width direction so as to be positioned inside of the directly matching portion C.

Furthermore, the vehicle interior side of the directly matching portion C serves as a space for functional components. Specifically, an inner handle 75 is mounted and a cup holder (not shown) is mounted in front of the inner handle 75. Furthermore, a power unit (not shown) of a wind regulator device is disposed outside of the directly matching portion C.

A pipe member 76 extending in the vehicle longitudinal direction is disposed on the upper-side and the vehicle interior side of the upper-side closed cross section A1 of the inner reinforcement 74. This pipe member 76 is connected to the bend portion of the upper edge 74b of the inner reinforcement 74 over the whole length by CO2 welding.

Furthermore, when viewed in the vehicle width direction, the front end 76a of the pipe member 76 is set at a position on the front side of the cup holder and in front of a sitting passenger (not shown), and a rear end 76b thereof is set at a position of a seat back (not shown).

Thus, two closed cross sections, the upper-side closed cross section A1 and the pipe member 76, are formed above the directly matching portion C, and the two closed cross sections, the lower-side closed cross section A2 and the closed cross section B of the inner reinforcement 74 and the door inner 15, are formed therebelow. These are formed over the whole length of the directly matching portion C. Thus, rigidity of the directly matching portion C as a whole can be increased, and a bending point generated due to the formation of the directly matching portion C can be eliminated.

Effects of this embodiment are explained below.

According to the vehicle body structure of this embodiment, since the beltline reinforcement 20 has a vertically long rectangular closed cross section A constituted solely thereby, rigidity in the beltline L portion of the door main body 16 can be increased, a cross-sectional collapse due to an input upon a collision can be prevented, and the input can be effectively allowed to escape to the rear of the body.

Furthermore, since, in a portion of the beltline reinforcement 20 closer to the front side which is large in upper and lower dimensions, a directly matching portion C is formed by depressing the outer reinforcement 73 and the inner reinforcement 74 so as to be brought into contact with each other, and the inner handle 75 and the cup holder are disposed by utilizing a portion on the vehicle interior side of the directly matching portion C as a space for functional components, protrusion of the functional components toward the vehicle interior can be prevented, thereby securing an indoor space. Furthermore, since a portion outside of the directly matching portion C serves as a space for a power unit, a space for a power unit can be secured, and the power unit can be disposed without interfering with a door glass.

Furthermore, since the directly matching portion C is formed so that the upper-side and lower-side closed cross sections A1, A2 remain, and both the closed cross sections A1, A2 are communicated with the closed cross section A of the front and rear thereof, required rigidity can be ensured while the directly matching portion C is formed, and a cross-sectional collapse due to the formation of the directly matching portion C can be prevented.

In this embodiment, since the upper-side closed cross section A1 is displaced outside of the directly matching portion C while the lower-side closed cross section A2 is displaced inside of the directly matching portion C, the aforementioned space for the inner handle 75 and the power unit can be secured by effectively utilizing a free space.

In this embodiment, a pipe member 76 is connected to the vehicle interior side of the upper edge 74b of the inner reinforcement 74, a decrease in rigidity of the directly matching portion C can be compensated by the pipe member 76, and a cross-sectional collapse due to the formation of the directly matching portion C can be reliably prevented.

Furthermore, since the pipe member 76 is displaced in a bend portion of the upper edge 74b of the inner reinforcement 74, the pipe member 76 can be disposed by effectively utilizing a free space of the door main body 16, and the door width does not need to be made larger due to disposition of the pipe member 76.

Furthermore, since a front end 76a of the pipe member 76 is set at a position in front of a sitting passenger, and the rear end 76b is set at a seat back position, the front end 76a and the rear end 76b of the pipe member 76 become bending points upon a lateral collision, the door is bent at a position distant from a passenger, and influence on the passenger can be prevented.

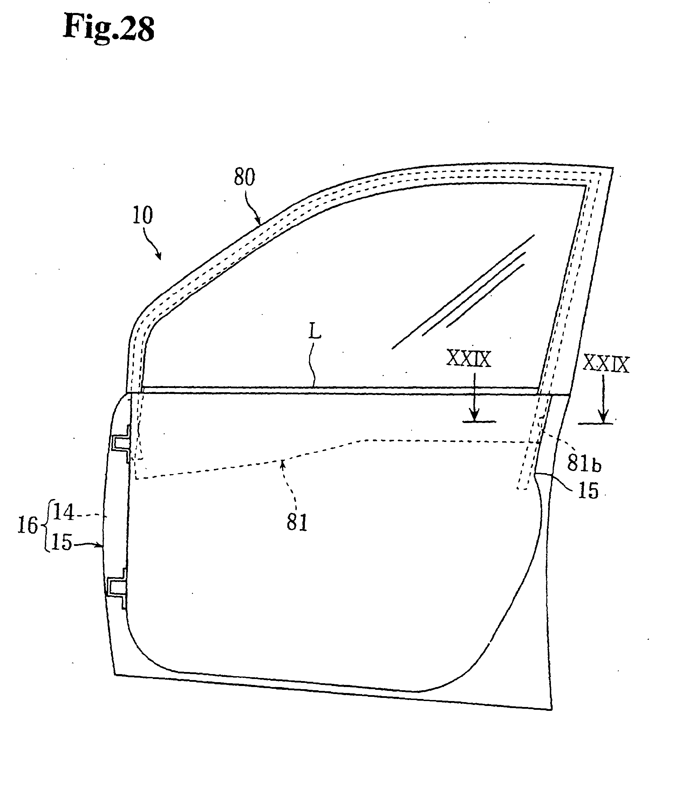

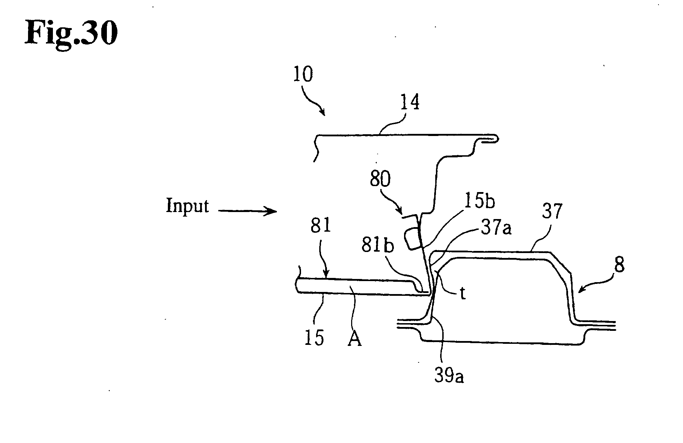

Figs. 28 to 30 are views for explaining a body structure of an automobile according to one embodiment (fifth embodiment) of twenty second aspect of the invention.

The vehicle body structure of this embodiment is constituted such that a beltline reinforcement 81 is disposed along a beltline L and a sash frame 80 for a window frame is connected in a door main body 16 of a front door 10 and specifically has the following structure.

A rear portion 81a of the beltline reinforcement 81 is inclined toward the inside so that a gap with the door inner 15 becomes narrower toward the rear side in a plan view. Furthermore, an extending portion 81b extending toward the rear is bent at the rear end portion of the beltline reinforcement 81. When viewed from the side of the body, the extending portion 81b is lapped over the sash frame 80 in the vehicle width direction, and connected to a corner portion of the rear wall 15b distant from the sash frame 80 toward the inside of the vehicle by spot welding.

A gap "t" of about 2-4 mm is provided between a front wall 37a of a pillar outer 37 and a front wall 39a of a pillar reinforcement 39 forming the front wall of the center pillar 8. This gap "t" is set to be about 4-5 times of the plate thickness of the pillar outer 37 and the pillar reinforcement 39, specifically 3 mm.

Effects of this embodiment are explained below.

An input due to an impact upon a frontal-impact collision is transmitted from the apron reinforcement to the beltline reinforcement 81 of the door main body 16 via the front pillar, and from the beltline reinforcement 81 to the center pillar 8. In this case, the extending portion 81b of the beltline reinforcement 81 is disposed toward the rear along with displacement of the door main body 16 toward the rear and pierces the front wall 37a of the pillar outer 37. Then, the front wall 37a is depressed and deformed in a doglegged shape in a plan view. Consequently, movement of the door main body 16 in the vehicle width direction toward the open door is restricted, and the input is transmitted to the center pillar 8. Furthermore, when the front wall 37a of the pillar outer 37 is deformed and hits the front wall 39a of the pillar reinforcement 39, displacement of the beltline reinforcement 81 toward the rear is restricted, and the door can be opened after the collision.

Thus, according to this embodiment, since, when viewed from the side of the body, the extending portion 81b of the beltline reinforcement 81 is lapped over the sash frame 80 and connected to a corner portion of the rear wall 15b of the door inner 15, the extending portion 81b of the beltline reinforcement 81 pierces and wedgingly engages the central portion of the front wall 37a of the pillar outer 37 due to an input from the front of the vehicle. Consequently, displacement of the door main body 16 toward the open door side is restricted. As a result, an input upon a collision can be reliably transmitted to the center pillar 8 via the beltline reinforcement 81, and influence on the vehicle interior can be avoided.

Furthermore, since the extending portion 81b of the beltline reinforcement 81 is lapped over the sash frame 80 and connected to a position distant from the sash frame 80 toward the inside of the vehicle, an input to the beltline reinforcement 81 is not allowed to escape to the sash frame 80 side, only the extending portion 81b of the beltline reinforcement 81 is displaced toward the rear, and the input can be more reliably transmitted to the center pillar 8.

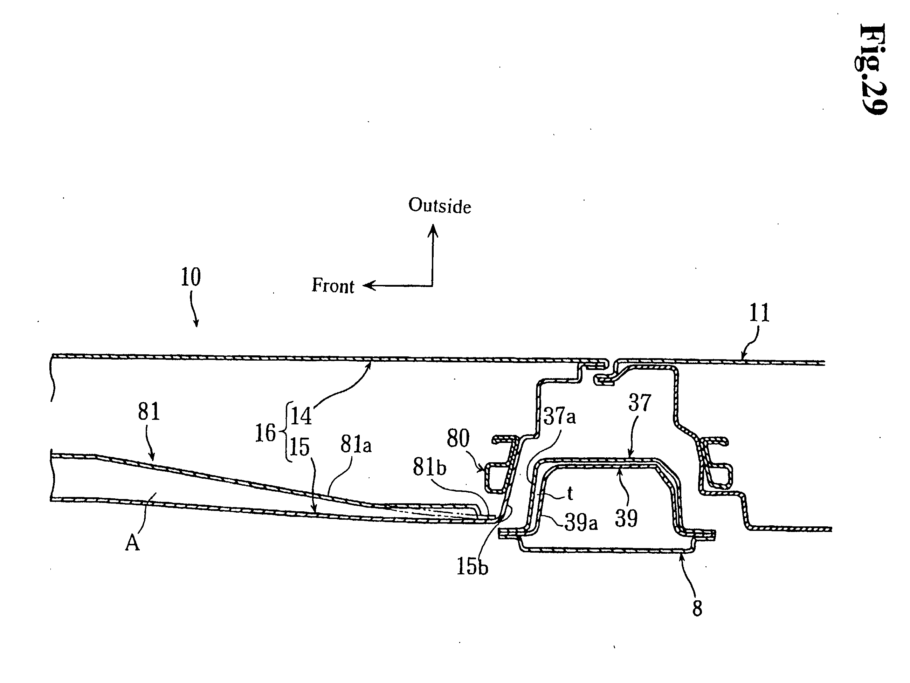

It is noted that the rear portion 81a of the beltline reinforcement 81 may be formed in a line so as to be continuous with the extending portion 51b (see an alternate long and two short dashes line in Fig. 29). In this case, an engagement to the pillar outer 37 can be more reliably achieved.

In this embodiment, since a gap "t" of about 2-4 mm is provided between the front wall 37a of the pillar outer 37 and the front wall 39a of the pillar reinforcement 39, an engagement margin to the front wall 81a of the beltline reinforcement 81 can be set, and, while displacement of the door main body 16 toward the open door is stopped, the front door 10 can be opened after a collision.

## Claims

1. A body structure (2) of an automobile (1) in which a door main body (16) is disposed on a pillar member extending in a vehicle vertical direction so that a door main body (16) wall in the vehicle longitudinal direction and a pillar member wall in the vehicle longitudinal direction are at least partly overlapped with each other as viewed in the vehicle longitudinal direction, and a beltline reinforcement (20, 24) extending in the vehicle longitudinal direction is disposed in the door main body (16) so that an input upon a vehicle collision is transmitted to a rear portion of the vehicle body via the pillar member and the beltline reinforcement (20),
**characterized in that**
an end portion of the beltline reinforcement (20, 24) in the longitudinal direction is extended so as to be made adjacent to or brought into contact with a front-side wall and a rearside wall of the door main body (16) while rigidity of a vehicle outside wall (5d) of the pillar member is made higher than rigidity of a portion of the wall of the pillar member in the vehicle longitudinal direction opposed to the beltline reinforcement (20).

2. The body structure (2) of an automobile (1) according to Claim 1, wherein the pillar member is a front pillar (5), a rear end portion of the apron reinforcement (30) extending toward the front of a vehicle is connected to the front pillar (5), a bulkhead (33) having a box cross section extending in the vehicle longitudinal direction is disposed in the apron reinforcement (30) joint portion within the front pillar (5), a beltline reinforcement (20) is disposed in the front door (10) so as to be substantially at the same height position as that of the apron reinforcement (30), and a cut-out recessed portion (33a) is formed in a portion of the bulkhead (33) which is opposed to the beltline reinforcement (20).

3. The body structure (2) of an automobile (1) according to Claim 1 or Claim 2, wherein the pillar member is a front pillar (5) extending in a vehicle vertical direction, a rear end portion of an apron reinforcement (30) extending in a vehicle longitudinal direction is joined to the front pillar (5), wherein with a bend line set at a portion of the apron reinforcement (30) on a front side of the joint portion with the front pillar (5) so as to extend in the vertical direction, portion of the apron reinforcement (30) on a front side of the bend line serving as an origin is inclined toward interior of the vehicle, and a bead portion extending forward from the origin bend line is formed in the apron reinforcement (30).

4. The body structure (2) of an automobile (1) according to Claim 1, wherein the pillar member is a front pillar (5) extending in the vehicle vertical direction, a rear end portion of an apron reinforcement (30) extending in the vehicle longitudinal direction is connected to the front pillar (5), wherein an extending portion extending to an outside wall (5d) of the front pillar (5) is formed in the rear end portion of the apron reinforcement (30), and the extending portion and the outside wall (5d) are connected together by forming a box cross section therebetween.

5. The body structure (2) of an automobile (1) according to Claim 1, wherein the pillar member is a front pillar (5) extending in the vehicle vertical direction, a rear end portion of an apron reinforcement (30) extending in the vehicle longitudinal direction is connected to the front pillar (5), wherein a bulkhead (33) having a box cross section extending in the vehicle longitudinal direction is disposed in a portion corresponding to the apron reinforcement (30) joint portion within the front pillar (5), and an outside wall (5d) and an inside wall of the front pillar (5) are connected together by placing the bulkhead (33) across a gap therebetween.

6. The body structure (2) of an automobile (1) according to Claim 1, wherein the pillar member is a front pillar (5) extending in the vehicle vertical direction, a rear end portion of an apron reinforcement (30) extending in the vehicle longitudinal direction is connected to the front pillar (5), wherein an extending portion extending to an outside wall (5d) of the front pillar (5) is formed in the rear end portion of the apron reinforcement (30), the extending portion and the outside wall (5d) are connected together by forming a box cross section therebetween, a bulkhead (33) having a box cross section extending in the vehicle longitudinal direction is disposed in a portion corresponding to the apron reinforcement (30) joint portion within the front pillar (5), an outside wall (5d) and an inside wall of the front pillar (5) are connected together by placing the bulkhead (33) across a gap therebetween, a beltline reinforcement (20) is further provided along the door beltline in the front door (10), and the beltline reinforcement (20) is disposed substantially at the same height position as that of the apron reinforcement (30).

7. The body structure (2) of an automobile (1) according to Claim 1, wherein the beltline reinforcement (20) has a structure having a closed cross section, a rear end portion (20a, 20b) of the beltline reinforcement (20) has a shape becoming smaller in the vehicle width direction toward the rear side, and a predetermined gap is provided between an outer pillar and a pillar reinforcement of a pillar member opposed to the rear end surface of the beltline reinforcement (20).

8. The body structure (2) of an automobile (1) body according to Claim 1, wherein the beltline reinforcement (20) has a structure having a closed cross section, a door lock reinforcement disposed in a rear end portion in the door main body (16) is extended so as to surround the rear of the beltline reinforcement (20), and an escape hole is formed in a portion of the extending portion which faces a rear end surface of the beltline reinforcement (20).

9. The body structure (2) of an automobile (1) according to Claim 1, wherein the beltline reinforcement (20) has a structure having a closed cross section, a rear end portion (20a, 20b) of the beltline reinforcement (20) has a shape becoming smaller in the vehicle width direction toward the rear side, a predetermined gap is provided between an outer pillar and a pillar reinforcement of a pillar member opposed to a rear end surface of the beltline reinforcement (20), a door lock reinforcement disposed in a rear end portion in the door main body (16) is extended so as to surround the rear of the beltline reinforcement (20), and an escape hole is formed in a portion of the extending portion which faces the rear end surface of the beltline reinforcement (20).

10. The body structure (2) of an automobile (1) according to Claim 1, wherein the beltline reinforcement (20) has a structure having a closed cross section in a substantially rectangular shape which is long in a vertical direction, a vehicle front side portion thereof is larger than a rear side portion thereof in the vertical direction, a directly matching portion is formed in a portion of the beltline reinforcement (20) closer to the front side by bringing at least a vehicle interior-side wall of a central portion in the vertical direction into contact with a vehicle outside wall (5d) so that upper-side and lower-side closed cross sections remain, and the vehicle interior side of the directly matching portion serves as a space for functional components.

11. The body structure (2) of an automobile (1) according to Claim 1, wherein a sash frame for a window frame is connected to a door inner panel in the main body of the door, and a rear end portion (20a, 20b) of the beltline reinforcement (20) is extended so as to lap over the sash frame when viewed from the side of the vehicle, the extending portion is connected to the rear end portion of the door inner panel, a predetermined gap is provided between a pillar outer and a pillar reinforcement of the pillar member in a portion facing the extending portion.

## Patentansprüche

1. Karosseriestruktur (2) eines Automobils (1), in der ein Türhauptteil auf einem Säulenelement angeordnet ist, das sich in einer vertikalen Richtung des Fahrzeugs erstreckt, so dass eine Wand des Türhauptteils (16) in Längsrichtung des Fahrzeugs und ein Säulenelement in der Längsrichtung des Fahrzeugs zumindest teilweise miteinander überlappen sind, wenn sie in der Längsrichtung des Fahrzeugs betrachtet werden, und sich eine Gürtellinien-Verstärkung (20, 24), die sich in der Längsrichtung des Fahrzeugs erstreckt, in dem Türhauptteil (16) angeordnet ist, so dass eine bei einer Fahrzeugkollision zugeführte Energie über das Säulenelement und die Gürtellinien-Verstärkung (20) an einen hinteren Abschnitt der Fahrzeugkarosserie übertragen wird,
**dadurch gekennzeichnet, dass**
ein Endabschnitt der Gürtellinien-Verstärkung (20, 24) in Längsrichtung so verlängert ist, dass er an eine Vorderseitenwand und eine Rückwand des Türhauptteils (16) angrenzt oder mit diesen in Berührung gebracht ist, während die Festigkeit einer Fahrzeug-Außenwand (5d) des Säulenteils größer gemacht ist, als die Festigkeit eines Abschnitts der Wand des Säulenteils in Längsrichtung des Fahrzeugs, die der Gürtellinien-Verstärkung (20) gegenüberliegt.

2. Karosseriestruktur (2) eines Automobils (1) nach Anspruch 1, wobei
das Säulenteil eine Frontsäule (5) ist,
ein rückwärtiger Abschnitt der Schutzblechverstärkung (30), die sich zur Vorderseite eines Fahrzeugs erstreckt, mit der Frontsäule (5) verbunden ist,
ein Rumpfspant (33), der einen kastenförmigen Querschnitt hat und sich in Längsrichtung des Fahrzeugs erstreckt, in dem Verbindungsabschnitt der Schutzblechverstärkung (30) innerhalb der vorderen Säule (5) angeordnet ist,
eine Gürtellinien-Verstärkung (20) so in der vorderen Tür (10) angeordnet ist, dass sie im wesentlichen auf der gleichen Höhenposition wie die der Schutzblechverstärkung (30) ist, und
ein ausgeschnittener Aussparungsabschnitt (33a) in einem Abschnitt des Rumpfspants (33) gebildet ist, welcher der Gürtellinien-Verstärkung (20) gegenüberliegt.

3. Karosseriestruktur (2) eines Automobils (1) nach Anspruch 1 oder 2, wobei
das Säulenteil eine vordere Säule (5) ist, die sich in vertikaler Richtung eines Fahrzeugs erstreckt,
ein rückwärtiger Endabschnitt einer Schutzblechverstärkung (30), die sich in Längsrichtung des Fahrzeugs erstreckt, mit der vorderen Säule (5) verbunden ist,
wobei mit einer gekrümmten Linie, die an einem Abschnitt der Schutzblechverstärkung (30) auf einer Vorderseite des Verbindungsabschnitts mit dem vorderen Pfeiler (5) so eingestellt ist, dass sie sich in vertikaler Richtung erstreckt, ein Abschnitt der Schutzblechverstärkung (30) auf einer Vorderseite der gebogenen Linie, die als ein Ursprung dient, in Richtung auf das Innere des Fahrzeugs geneigt ist, und ein wulstförmiger Abschnitt, der sich vorwärts von der gekrümmten Ursprungslinie erstreckt, in der Schutzblechverstärkung (30) ausgebildet ist.

4. Karosseriestruktur (2) eines Automobils (1) nach Anspruch 1, wobei
das Säulenteil eine vordere Säule (5) ist, die sich in der vertikalen Richtung des Fahrzeugs erstreckt,
ein rückwärtiger Endabschnitt einer Schutzblechverstärkung (30), die sich in Längsrichtung des Fahrzeugs erstreckt, mit dem Frontpfeiler (5) verbunden ist, wobei ein hervorstehender Abschnitt, der sich bis zu einer Außenwand (5d) der vorderen Säule (5) erstreckt, in dem hinteren Ende der Schutzblechverstärkung (30) ausgebildet ist, und
der hervorragende Bereich und die Außenwand (5d) miteinander verbunden sind, wobei sie dazwischen einen kastenförmigen Querschnitt bilden.

5. Karosseriestruktur (2) eines Automobils (1) nach Anspruch 1,
wobei das Säulenelement eine vordere Säule (5) ist, die sich in der vertikalen Richtung des Fahrzeugs erstreckt, ein hinterer Endabschnitt einer Schutzblechverstärkung (30), die sich in Längsrichtung des Fahrzeugs erstreckt, mit der Frontsäule (5) verbunden ist,
wobei ein Rumpfspant (33), der einen kastenförmigen Querschnitt hat und sich in Längsrichtung des Fahrzeugs erstreckt, in einem Bereich angeordnet ist, der dem Verbindungsabschnitt der Schutzblechverstärkung (30) innerhalb der vorderen Säule (5) entspricht, und eine äußere Wand (5d) und eine innere Wand der vorderen Säule (5) miteinander verbunden sind, indem der Rumpfspant (33) über eine dazwischen liegende Lücke angeordnet ist.

6. Karosseriestruktur (2) eines Automobils (1) nach Anspruch 1, wobei
das Säulenteil eine vordere Säule (5) ist, die sich in vertikaler Richtung des Fahrzeugs erstreckt,
ein hinteres Ende einer Schutzblechverstärkung (30), die sich in Längsrichtung des Fahrzeugs erstreckt, mit der vorderen Säule (5) verbunden ist, wobei
ein hervorstehender Bereich, der sich bis zu einer äußeren Wand (5d) der vorderen Säule (5) erstreckt im hinteren Bereich der Schutzblechverstärkung (30) ausgebildet ist,
der hervorstehende Bereich und die Außenwand (5d) durch Ausbilden eines kastenförmigen Querschnitts dazwischen miteinander verbunden sind,
ein Rumpfspant (33), der einen kastenförmigen Querschnitt hat und sich in Längsrichtung des Fahrzeugs erstreckt, in einem Bereich angeordnet ist, der dem Verbindungsabschnitt der Schutzblechverstärkung (30) innerhalb der vorderen Säule (5) entspricht,
eine äußere Wand (5d) und eine innere Wand der Frontsäule (5) miteinander verbunden sind durch Anordnen des Rumpfspants über einer dazwischen liegenden Lücke,
weiterhin eine Gürtellinien-Verstärkung (20) entlang der Türgürtellinie in der vorderen Tür (10) vorgesehen ist, und
die Gürtellinien-Verstärkung (20) im Wesentlichen auf derselben Höhenposition wie die der Schutzblechverstärkung (30) angeordnet ist.

7. Karosseriestruktur (2) eines Automobils (1) nach Anspruch 1,
wobei die Gürtellinien-Verstärkung (20) einen Aufbau hat, der einen geschlossenen Querschnitt hat, wobei ein hinterer Endabschnitt (20a, 20b) der Gürtellinien-Verstärkung (20) eine Form hat, die in Richtung der Breite des Fahrzeugs zum hinteren Teil kleiner wird, und eine vorgegebene Lücke zwischen einer äußeren Säule und einer Säulenverstärkung eines Säulenelements, das der Oberfläche des hinteren Endes der Gürtellinien-Verstärkung (20) gegenüberliegt, vorgesehen ist.

8. Karosseriestruktur (2) einer Automobil-Karosserie (1) nach Anspruch 1, wobei die Gürtellinien-Verstärkung (20) einen Aufbau hat, der einen geschlossenen Querschnitt hat, eine Türverschlussverstärkung, die in einem hinteren Endabschnitt in dem Türhauptteil (16) angeordnet ist, so verlängert ist, dass sie das hintere Teil der Gürtellinien-Verstärkung (20) umschließt, und ein Ausgleichsloch in einem Abschnitt des verlängerten Bereichs ausgebildet ist, der einer Oberfläche eines hinteren Endes der Gürtellinien-Verstärkung (20) gegenüberliegt.

9. Karosseriestruktur (2) eines Automobils (1) nach Anspruch 1, wobei
die Gürtellinien-Verstärkung (20) einen Aufbau hat, der einen geschlossenen Querschnitt hat, ein hinterer Endabschnitt (20a, 20b) der Gürtellinien-Verstärkung (20) eine Form hat, die in Richtung der Breite des Fahrzeugs zur hinteren Seite kleiner wird,
eine vorbestimmte Lücke zwischen einer äußeren Säule und einer Säulenverstärkung eines Säulenelements, das einer Oberfläche eines hinteren Endes der Gürtellinien-Verstärkung (20) gegenüberliegt, vorgesehen ist,
eine Türschlossverstärkung, die in einem hinteren Endbereich im Hauptteil der Tür (16) angeordnet ist, sich so erstreckt, dass sie das hintere Teil der Gürtellinien-Verstärkung (20) umgibt, und
ein Ausgleichsloch in einem Bereich des verlängerten Bereichs ausgebildet ist, welcher der Oberfläche des hinteren Endes der Gürtellinien-Verstärkung (20) gegenüberliegt.

10. Karosseriestruktur (2) eines Automobils (1) nach Anspruch 1, wobei
die Gürtellinien-Verstärkung (20) einen geschlossenen Querschnitt in einer im wesentlichen rechteckigen Form hat, die in einer vertikalen Richtung lang ist, wobei ein Fahrzeugvorderseitenabschnitt davon in vertikaler Richtung größer ist als ein hinterer Seitenabschnitt davon,
ein unmittelbar passender Abschnitt in einem Abschnitt der Gürtellinien-Verstärkung (20) näher an der Vorderseite geformt ist, indem wenigstens eine Innenseitenwand des Fahrzeugs von einem mittleren Bereich in der vertikalen Richtung in Kontakt mit einer Außenwand des Fahrzeugs (5d) gebracht wird, so dass die geschlossenen Querschnitte der Ober- und Unterseite erhalten bleiben und die Fahrzeuginnenseite des unmittelbar passenden Abschnitts als Raum für funktionale Komponenten dient.

11. Karosseriestruktur (2) eines Automobils (1) nach Anspruch 1, wobei
ein Schieberahmen für einen Fensterrahmen mit einer inneren Türplatte im Hauptkörper der Tür verbunden ist, und ein hinterer Endabschnitt (20a, 20b) der Gürtellinien-Verstärkung (20) sich so erstreckt, dass er den Schieberahmen überlappt, wenn er von der Seite des Fahrzeugs betrachtet wird,
der hervorstehende Bereich mit dem hinteren Endabschnitt der inneren Türplatte verbunden ist,
eine vorgegebene Lücke zwischen einer Außenseite einer Säule und einer Säulenverstärkung des Säulenteils in einem Bereich, der dem hervorstehenden Bereich gegenüberliegt, vorgesehen ist.

## Revendications

1. Une structure du corps (2) d'un automobile (1) dans laquelle un corps principal d'une portière (16) est disposé sur une jambe d'une colonne se prolongeant dans une direction verticale du véhicule, de sorte qu'un mur du corps principal de la portière (16) dans la direction longitudinale du véhicule, et un mur d' une jambe de la colonne dans la direction longitudinale du véhicule, soient au moins en partie recouverts l'un avec l'autres, comme vus par la direction longitudinale du véhicule, et un renfort de ligne de la ceinture (20, 24) se prolongeant dans la direction longitudinale du véhicule soit disposé dans le corps principal de la portière (16) de sorte qu'une entrée après une collision entre véhicules soit transmise à une portion arrière du corps de véhicule par l'intermédiaire du jambe de la colonne et du renfort de ligne de la ceinture (20), **caractérisé en ce** q'une partie terminale du renfort de ligne de la ceinture (20, 24) ) dans la direction longitudinale est prolongé afin de devenir adiacente à, ou mis en contact avec un mur frontale et un mur du côté arrière du corps principal de la portière (16), tandis que, la rigidité d'un mur extérieur (5d) du jambe de la colonne du véhicule est rendue plus haute que la rigidité d'une portion du mur du jambe de la colonne dans la direction longitudinale de véhicule, opposée au renfort de ligne de la ceinture (20).

2. La structure du corps (2) d'un automobile (1) selon la revendication 1, où la jambe de la colonne est formée par une colonne frontale (5), une partie d'extrémité arrière du renfort du panneau (30) se prolongeant vers le front d'un véhicule est reliée a la colonne frontale (5), un compartiment étanche (33) ayant une section transversale de boîte, se prolongeant dans la direction longitudinale du véhicule, est disposée dans la portion de jonction du renfort du panneaux (30) dans la colonne frontale (5), un renfort de ligne de la ceinture (20) est disposé dans la portière d'avant (10), afin d'être sensiblement à la même position d'hauteur que le renfort du panneau (30), et une portion découpé enfoncée (33a) est formée dans une partie du compartiment étanche (33), qui est opposée au renfort (20) du ligne de la ceinture.

3. La structure du corps (2) d'un automobile (1) selon la revendication 1 ou la revendication 2, où la jambe d'une colonne est formée par une colonne frontale (5) se prolongeant dans une direction verticale du véhicule, une partie d'extrémité arrière d'un renfort du panneau (30) se prolongeant dans une direction longitudinale de véhicule, est jointe a la colonne frontale (5), où, avec une ligne de courbure placé à une partie frontale de jonction du renfort du panneau (30) avec la colonne frontale (5) afin de se prolonger dans la direction verticale, la partie du renfort du panneau (30) pliée sur la partie frontale de la ligne de courbure d'origine, est inclinée vers l'intérieur du véhicule, et une partie de couche se prolongeant avant la ligne de courbure d'origine est formée dans le renfort du tablier (30).

4. La structure du corps (2) d'un automobile (1) selon la revendication 1, où la jambe de la colonne est formée par une colonne frontale (5) se prolongeant dans la direction verticale du véhicule, une partie de l'extrémité arrière d'un renfort du panneau (30) se prolongeant dans la direction longitudinale du véhicule est qui est reliée à la colonne frontale (5), où une partie d'extension se prolongeant à un mur extérieur (5d) de la colonne frontale (5) est formé dans la partie d'extrémité arrière du renfort du panneau (30), et la portion d'extension et le mur extérieur (5d) sont reliés ensemble, en formant entre eux une section transversale de boîte.

5. La structure de corps (2) d'un automobile (1) selon la revendication 1, où la jambe de la colonne est formée par une colonne frontale (5) se prolongeant dans la direction verticale du véhicule, une partie de l'extrémité arrière d'un renfort du panneau (30) se prolongeant dans la direction longitudinale de véhicule est reliée a la colonne frontale (5), où un compartiment étanche (33) ayant une section transversale de boîte se prolongeant dans la direction longitudinale du véhicule, est disposée dans une portion correspondant a la portion de jonction du renfort du panneau (30) dans la colonne frontale (5), et un mur extérieur (5d) et un mur intérieur de la colonne frontale (5) sont reliés ensemble, en plaçant le compartiment étanche (33) à travers d'une fente d' entre eux.

6. La structure du corps (2) d'un automobile (1) selon la revendication 1, où la jambe de la colonne est formée par une colonne frontale (5) se prolongeant dans la direction verticale du véhicule, une partie d'extrémité arrière d'un renfort du panneau (30) se prolongeant dans la direction longitudinale du véhicule est reliée a la colonne frontale (5), où une portion d'extension se prolongeant à un mur extérieur (5d) de la colonne frontale (5) est formés dans la partie d'extrémité arrière du renfort du panneau (30), la portion d'extension et le mur extérieur (5d) sont reliés ensemble en formant entre eux une section transversale de boîte, un compartiment étanche (33) ayant une section transversale de boîte se prolongeant dans la direction longitudinale du véhicule est disposée dans une portion correspondant a la jonction du renfort du panneau (30) dans l'intérieur de la colonne frontale (5), un mur extérieur (5d) et un mur intérieur de la colonne frontale (5) sont reliés ensemble, en plaçant le compartiment étanche (33) à travers d'une fente d'entre eux, un renfort de ligne de la ceinture (20) est réalisé le long de la ligne de la ceinture de portière dans la portière avant (10), et le renfort de ligne de la ceinture (20) est disposé sensiblement à la même position de hauteur que celui du renfort du panneau (30).

7. La structure du corps (2) d'un automobile (1) selon la revendication 1, où la ligne du renfort de la ceinture (20) a une structure avec une section transversale fermée, une partie de l'extrémité arrière (20a, 20b) du renfort de ligne de la ceinture (20) a une forme qui devient plus petite dans la direction de largeur du véhicule vers l'arrière, et une fente prédéterminé est prévu entre une colonne externe et un renfort de la colonne d'un jambe de colonne opposé à la surface d'extrémité arrière du renfort de ligne de la ceinture (20).

8. La structure du corps (2) d'un automobile (1) selon la revendication 1, où le renfort de ligne de la ceinture (20) a une structure avec une section transversale fermée, un renfort du serrure de la portière disposé dans une partie de l'extrémité arrière dans le corps principal de la portière (16) est prolongé afin d'entourer l'arrière du renfort de ligne de la ceinture (20), et un trou d'évasion est formé dans une portion de la partie d'extension qui est face à face à une surface d'extrémité arrière du renfort de ligne de la ceinture (20).

9. La structure du corps (2) d'un automobile (1) selon la revendication 1, où le renfort de ligne de la ceinture (20) a une structure avec une section transversale fermée, une partie d'extrémité arrière (20a, 20b) du renfort de ligne de la ceinture (20) a une forme qui devienne plus petite dans la direction de largeur du véhicule vers l'arrière, une fente prédéterminé est prévu entre une colonne externe et un renfort de la colonne d'une jambe de colonne opposé à une surface d'extrémité arrière du renfort de ligne de la ceinture (20), un renfort de la serrure de la portière disposé dans une partie de l'extrémité arrière dans le corps principal de la portière (16) est prolongé afin d'entourer l'arrière du renfort de ligne de la ceinture (20), et un trou d'évasion est formé dans une portion de la partie d'extension qui est face à face à la surface d'extrémité arrière du renfort de ligne de la ceinture (20).

10. La structure du corps (2) d'un automobile (1) selon la revendication 1, où le renfort de ligne de la ceinture (20) a une structure avec une section transversale fermée dans une forme essentiellement rectangulaire, qui est plus longue dans une direction verticale, une portion de la partie frontale du véhicule qui est plus large dans la direction verticale qu'une portion de la partie arrière, une partie directement assortie est formée dans une portion du renfort de ligne de la ceinture (20) plus près de la partie frontale en apportant au moins un mur du partie centrale du côté intérieur du véhicule dans la direction verticale en contact avec un mur extérieur du véhicule (5d), de la manière que les sections transversales du côté supérieur et du côté inférieur restent, et le côté intérieur du véhicule des portions directement assortis servent comme espace aux composants fonctionnels.

11. La structure du corps (2) d'un automobile (1) selon la revendication 1, où une rame de ceinture pour une rame de fenêtre est reliée à un panneau intérieur d'une portière dans son corps principal, et une partie d'extrémité arrière (20a, 20b) du renfort de ligne de la ceinture (20) est prolongé afin de s'enrouler au-dessus de la rame de ceinture, quant on regarde du côté du véhicule, la partie d'extension est reliée à l'extrémité arrière finale du panneau intérieur de la portière, une fente prédéterminé est prévu entre un extérieur d'une colonne et un renfort de colonne de la jambe de colonne dans une portion face à face à la portion d'extension.
